# EUROPEAN PATENT APPLICATION

(11) **EP 2 919 127 A1**
(43) Date of publication of application: **16.09.2015**
(21) Application number: 12888003.6
(22) Date of filing: 06.11.2012
(51) Int. Cl.: G06F 17/30

(54) **INFORMATION PROCESSING DEVICE, BROWSING HISTORY SORTING METHOD, AND BROWSING HISTORY SORTING PROGRAM**

(71) Applicant: Fujitsu Limited, Kawasaki-shi, Kanagawa 211-8588 (JP)
(72) Inventor: KARASUDANI, Akira, Kawasaki-shi Kanagawa 211-8588 (JP)
(74) Representative: Ward, James Norman
(86) International application number: PCT/JP2012/078750
(87) International publication number: WO 2014/073037

(57) **Abstract**

An information processing apparatus includes a browsing operation detection unit configured to detect a browsing operation by a user with respect to a web page displayed on a screen; a map information browse detection unit configured to detect browsing of map information relevant to the web page; a storage unit configured to store browsing history in which location information corresponding to the map information obtained by the map information browse detection unit and the browsing operation obtained by the browsing operation detection unit are associated with each other; a map information attention level extraction unit configured to extract a map attention level corresponding to a browsing operation performed on the map information, with respect to the browsing history stored in the storage unit; and a classification unit configured to classify the web page for each item of the location information, by using the map attention level obtained by the map information attention level extraction unit.

## Description

### TECHNICAL FIELD

The present invention is related to an information processing apparatus, a browsing history classification method, and a browsing history classification program.

### BACKGROUND ART

Conventionally, before a user goes out for shopping, travelling, etc., the user often accesses a web server, etc., by using a communication terminal such as a smartphone, a tablet terminal, a personal computer (PC), etc., to check information regarding the destination by looking up a web page. For example, the user checks in advance, from a web server, etc., sale information, the location, and the business hours of the store of the destination, the path to the destination, the overview and the location of a sightseeing spot, whether there is a parking area, the entrance time, the entrance fee, etc. Furthermore, when the user is outside, the user uses a mobile communication terminal such as a smartphone, to browse again the browsing history (for example, a web page) of the information that has been checked for preparation.

However, by a terminal such as a smartphone, etc., it is highly likely that various web pages have been browsed other than those relevant to the destination, and it is difficult to find and refer to only the web page relevant to the present destination from among the browsing history of multiple web pages. Furthermore, there may be cases where the number of destinations is not one; for example, information may be checked for a plurality of destinations to go out to on the weekend, or information may be checked for a destination to go out to a few days later and a destination to go out to a few months later. In this manner, when information is simultaneously checked for a plurality of destinations, it is even more difficult to find and browse again only the web page relevant to the present destination.

Note that for the purpose of browsing again a web page that has been used for preparatory checking, there are a bookmark function, a function of searching the browsing history, and a function of classifying the browsing history. Furthermore, there is a method of acquiring a list of address keywords from the search history, counting the search frequency, and displaying a map matching the search trend; and a method of extracting a keyword from the search history and presenting a relevant map (see, for example, Patent Documents 1 through 4).

### Prior Art

### Patent document

Patent Document 1: Japanese Laid-Open Patent Publication No. 2006-65511
Patent Document 2: Japanese Laid-Open Patent Publication No. 2008-176511
Patent Document 3: Japanese Laid-Open Patent Publication No. 2002-175301
Patent Document 4: Japanese Laid-Open Patent Publication No. 2008-90802

### Disclosure of the Invention

### Problems to be Solved by the Invention

However, by the conventional methods described above, it is not possible to classify, with high priority, the destinations that are highly likely to be visited when the user goes out, i.e., the web pages that are highly likely to be browsed again, among the browsing history (web pages) used for preparatory checking of the destination by the user. Furthermore, it is not possible to present the web pages relevant to the destinations that the user is highly likely to visit in the future, with priority higher than that of other web pages.

According to one aspect, the objective of the present invention is to appropriately classify the browsing history.

### MEANS TO SOLVE THE PROBLEMS

According to an embodiment, an information processing apparatus includes a browsing operation detection unit configured to detect a browsing operation by a user with respect to a web page displayed on a screen; a map information browse detection unit configured to detect browsing of map information relevant to the web page; a storage unit configured to store browsing history in which location information corresponding to the map information obtained by the map information browse detection unit and the browsing operation obtained by the browsing operation detection unit are associated with each other; a map information attention level extraction unit configured to extract a map attention level corresponding to a browsing operation performed on the map information, with respect to the browsing history stored in the storage unit; and a classification unit configured to classify the web page for each item of the location information, by using the map attention level obtained by the map information attention level extraction unit.

### EFFECTS OF THE INVENTION

It is possible to appropriately classify the browsing history.

### BRIEF DESCRIPTION OF DRAWINGS

FIG. 1 is a diagram indicating a schematic example of a browsing system according to a first embodiment.
FIG. 2 is a diagram indicating an example of a functional configuration of a client terminal.
FIG. 3 is a diagram indicating an example of a hardware configuration by which a browsing history classification process may be realized.
FIG. 4 is a flowchart indicating an example of a browsing history classification process according to the first embodiment.
FIG. 5 is a flowchart indicating an example of a classification process.
FIG. 6 is a flowchart indicating an example of a presentation process.
FIG. 7 is a diagram indicating an example of a location word DB.
FIG. 8 is a diagram indicating an example of map information browsing history.
FIG. 9 is a diagram indicating an example of web page browsing history.
FIG. 10 is a diagram indicating an example of classification results.
FIG. 11 is a diagram indicating an example of a screen presented when browsing again the browsing history.
FIG. 12 is a diagram indicating an example of a location word DB having a plurality of hierarchical layers.
FIG. 13 is a diagram indicating an example of a presentation screen using a location word DB including a plurality of hierarchical layers.
FIG. 14 is a diagram indicating an example of map information browsing history including additional information.
FIG. 15 is a diagram indicating an example of web page browsing history including additional information.
FIG. 16 is a diagram indicating an example of classification results including additional information.
FIG. 17 is a diagram indicating a schematic example of a browsing system according to a second embodiment.

### MODES FOR CARRYING OUT THE INVENTION

In the following, embodiments are described based on drawings. Note that in the following description, an example of a case of browsing again a web page is indicated as an example of browsing again the browsing history; however, the embodiment is not so limited.

### <First embodiment>

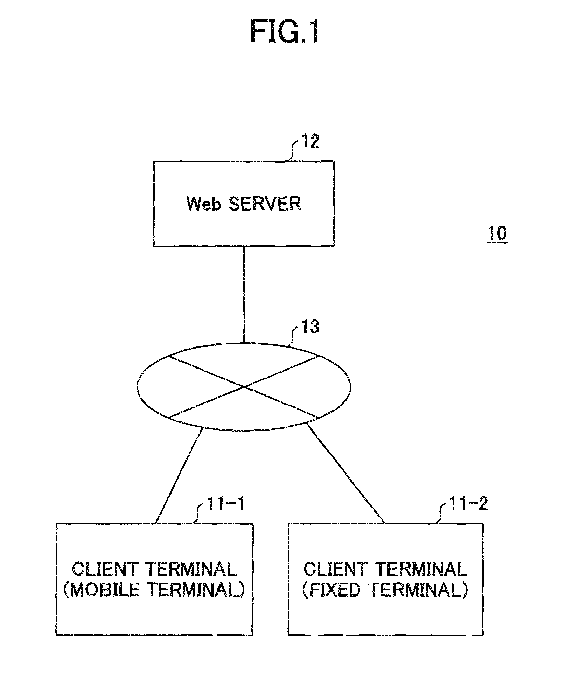

FIG. 1 is a diagram indicating a schematic example of a browsing system according to a first embodiment. A browsing system 10 indicated in FIG. 1 includes client terminals 11-1, 11-2 (hereinafter, collectively referred to as "client terminal 11" according to need) as examples of information processing apparatuses, and a web server 12. The client terminal 11 and the web server 12 are connected by a communication network 13 represented by, for example, the Internet, etc., in a state in which transmission/reception of information is possible. Note that the numbers, etc., of the client terminal 11 and the web server 12, are not limited to the example of FIG. 1.

The client terminal 11 may be, for example, a mobile communication terminal such as a smartphone and a tablet terminal (hereinafter, "mobile terminal"), and an installed-type communication terminal such as a PC, etc. (hereinafter, "fixed terminal"); however, the embodiment is not so limited. For example, the mobile terminal may be a game device, a music replay device, a car navigation system, etc. In the example of FIG. 1, a description is given assuming that the client terminal 11-1 is a mobile terminal, and the client terminal 11-2 is a fixed terminal.

Before going out, the user uses the client terminal 11 to access the web server 12, etc., via the communication network 13, and browses one or more web pages (sites) relevant to the destination, etc. The browsing history is stored in a storing unit, etc., such as the client terminal 11, together with time information, etc. Furthermore, the client terminal 11 uses the stored information to extract web pages relevant to destinations (location information) that are highly likely to be visited when the user goes out, and classifies the location information. Furthermore, when the client terminal 11 receives an instruction to present the classification result of the browsing history, etc., from the user, the client terminal 11 presents the corresponding browsing history.

For example, when the user has checked a position and the way to go to the position by accessing map information including a predetermined location word, the client terminal 11 extracts the map information, and extracts a web page relevant to the map information. Specifically, for example, when the user has browsed a web page including information of a map site while browsing a web page including a location word, the client terminal 11 extracts the corresponding web page. Note that, for example, it may be determined whether the user is browsing a web page by tracking the link of the same session, and when it is possible to acquire a page of the location information from a link, it is determined that the user is browsing a web page.

Note that in the first embodiment, a keyword (location word) relevant to a location (area) and an address may be extracted from the contents (text) of the title and the body text, etc., of a web page that the user has browsed, and only a web page including the location word may be acquired. Accordingly, it is possible to exclude web pages that are unrelated to the location, and narrow down the web pages to those relevant to the destination. Note that morphological analysis may be performed on the contents of the web page; prefectural and city government names (for example, Tokyo, Kyoto), municipal names (Shibuya ward, Sakyo ward), and street addresses may be extracted; and the location words may be weighted, etc., according to the appearance frequency, etc., of the location words.

Note that when a web page including a location word is browsed, and then map information relevant to the location word is browsed within a predetermined time, the client terminal 11 may extract the target web page and map information, etc. Furthermore, when a web page was browsed in the past, and then within a predetermined time from the date/time when the web page was browsed, a map relevant to the same location word as that of the browsed web page is browsed, etc., the client terminal 11 may extract the target web page and map information.

Furthermore, the client terminal 11 obtains an attention level expressing the extent of attention given to the browsed web page by the user, and extracts a web page and map information having a high level of attention. The attention level may be obtained by the browsing statuses of the respective web pages (for example, the browsing time, enlarged/reduced, the number of browsing times/browsing time of the same site (the web pages may differ as long as they are within the same site)), etc.; however, the embodiment is not so limited. Accordingly, for example, it is possible to exclude a web page (browsing history), etc., that was only glanced at by the user, and it is possible to narrow down the web pages only to those that the user is presumably strongly interested in.

Furthermore, with respect to the web pages that are obtained based on the above contents, the client terminal 11 may extract web pages and map information, etc., relevant to destinations that are highly likely to be visited when the user goes out, and classify the web pages and map information by location words, etc. Furthermore, the client terminal 11 may classify the web pages, for example, by different purposes of visiting a destination of the same location (area), or by the elapsed time from the time point of browsing (preparatory checking) a web page. For example, in the case of the same destination "Kyoto", the web pages are classified based on results obtained by preparatory checking, according to "Trip to Kyoto in Spring" and "Trip to Kyoto in Summer". Furthermore, the web pages may be classified based on the elapsed time from the time point of browsing (preparatory checking) a web page, in units of a predetermined number of days, in units of months, in units of seasons, in units of years, etc.

Furthermore, the client terminal 11 may present, to the user, the browsing history of the classified web pages and map information, etc., by sorting the items in a descending order according to the attention level. Furthermore, when the user uses the client terminal 11-1 that is a mobile terminal, the present position of the user (mobile terminal) may be acquired, and the classification result relevant to a location word of a location near the acquired present position, may be presented with high priority. Accordingly, the user may browse again the appropriate history information. Note that a location word of a location near the present position is, for example, a location word included within a predetermined distance range centered around the present position (for example, 10 km in radius); however, the embodiment is not so limited.

The web server 12 extracts a web page for which a browse request has been made from the client terminal 11 by a search keyword, etc., and causes the user of the client terminal 11 that has made the request, to browse the extracted web page. Note that the web server 12 may be a PC, a server, etc.; however, the embodiment is not so limited. Furthermore, the web server 12 may be constituted by a plurality of devices; for example, the web server 12 may have a configuration designed by cloud computing.

Note that in the browsing system 10 described above, the extraction of browsing history such as web pages and map information, etc., used for preparatory checking, the classification of the browsing history, and the presentation of the classification results, are performed with respect to information that is browsed at the same client terminal 11. That is to say, in the first embodiment, classification is separately performed based on the browsing history of the client terminal 11-1 and the browsing history of the client terminal 11-2, and the separate browsing history sets are presented at the respective client terminals.

### <Example of functional configuration in client terminal 11>

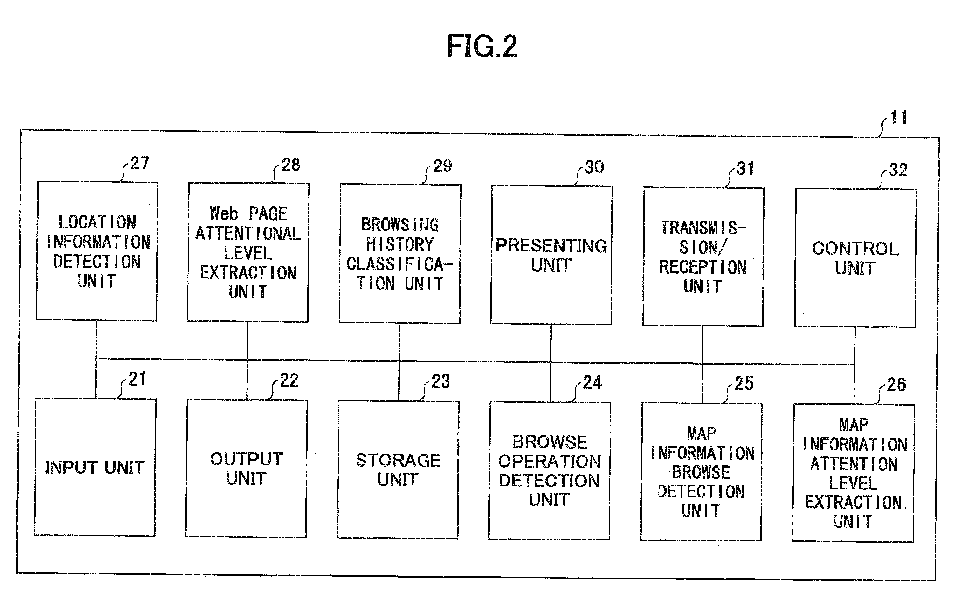

Next, a description is given of an example of a functional configuration of the client terminal 11 that is an example of the information processing apparatus described above, with reference to a diagram. FIG. 2 is a diagram indicating an example of a functional configuration of the client terminal.

The client terminal 11 indicated in FIG. 2 includes an input unit 21, an output unit 22, a storage unit 23, a browse operation detection unit 24, a map information browse detection unit 25, a map information attention level extraction unit 26, a location information detection unit 27, a web page attentional level extraction unit 28, a browsing history classification unit 29, a presenting unit 30, a transmission/reception unit 31, and a control unit 32.

The input unit 21 receives, from a user, etc., using the client terminal 11, the start and the end of various instructions, and various inputs such as input of a setting. Specifically, for example, the input unit 21 receives various instructions such as a detection instruction for a browse operation, a map information browse detection instruction, a map information attentional level extraction instruction, a location information detection instruction, a web page attention level extraction instruction, a web page classification instruction, a presentation instruction, a transmission/reception instruction, etc.

The input of information acquired by the input unit 21 may be input by, for example, an input interface, etc., of a keyboard, a mouse, etc., or may be input by a touch panel format using a screen, or may be input by using operation keys, etc. Furthermore, for example, the input unit 21 may include a voice sound input unit for inputting voice sound by a microphone, etc.

The output unit 22 outputs contents input by the input unit 21 and outputs contents executed based on the input contents, etc. Note that when the output unit 22 outputs information by screen display, the output unit 22 includes, for example, a display unit such as a display and a monitor, etc.; when the output unit 22 outputs voice sound, the output unit 22 includes, for example, a voice sound output unit such as a speaker, etc. Furthermore, for example, the input unit 21 and the output unit 22 may be an integrated type in which input and output are integrated, such as a touch panel, etc.

The storage unit 23 stores various types of information needed for executing a browsing history classification process. Specifically, the storage unit 23 stores a detection result of a browse operation, a browse detection result of map information, an extraction result of a map information attention level, a detection result of location information, an extraction result of a web page attention level, a web page classification result, a presentation result, etc. Furthermore, the storage unit 23 stores various types of setting information and a map database (hereinafter, "database" is referred to as "DB") for executing a browsing history classification process, a geographical name dictionary, a location word DB, map information browsing history, web page browsing history, a facility name DB, etc.

Furthermore, the storage unit 23 is able to read and write various types of stored information at predetermined timings according to need. The storage unit 23 is an assembly of multiple types of information as described above, and the storage unit 23 may have a function of a database that is systematically constituted such that the information may be searched and extracted by using, for example, a keyword, etc. The storage unit 23 is, for example, a hard disk, a memory, etc.

The browse operation detection unit 24 detects a browse operation (for example, operation history, etc.) with respect to a web page that is displayed on the screen of the client terminal 11. Specifically, the browse operation detection unit 24 detects, for example, various contents such as the start of browsing and the end of browsing a web page, the property of the web page, browsing another web page by clicking a link in the web page, enlarging and reducing a web page, printing, etc. Here, the property of a web page is a Uniform Resource Locator (URL) and a title of a web page, the body text of Hyper Text Markup Language (HTML), a URL embedded in the HTML, etc.; however, the embodiment is not so limited.

Furthermore, the browse operation detection unit 24 determines that the user is browsing information relevant to a map, when the URL of the web page that the user has started to browse, or the URL, which is embedded in the HTML, matches a URL that is defined in a map DB set in advance.

Note that, for example, the above-described embedded URL is not simply link information, but is an embedded page in the page; however, the embodiment is not so limited. When the browse operation detection unit 24 determines that the user is browsing information relevant to a map, the browse operation detection unit 24 outputs the information to the map information browse detection unit 25, and furthermore, when the URL of the web page is a URL that is not included in the map DB, the browse operation detection unit 24 outputs the information to the location information detection unit 27.

The map information browse detection unit 25 detects that the user has browsed the map information in the same session as the browsed web page. For example, the map information browse detection unit 25 calculates the difference between the end time of previously browsing the web page and the start time of browsing the map, and detects that the difference is within a predetermined time, etc. Furthermore, the map information browse detection unit 25 tracks the link of the web page being browsed, and detects that the map has been browsed, etc. Furthermore, the map information browse detection unit 25 may extract a location word from the map, and detect that the map information is browsed, based on whether the map of the same point as the location detected by the location information detection unit 27, is being browsed. The method of extracting a location word from the map information includes, for example, performing morphological analysis with respect to an address described in the map site and the contents of the web page of the browsed map site, and extracting a keyword, etc., relevant to a location (for example, a geographic name). Then, the extracted keyword is extracted as a location word. Note that examples of the location word are prefectural and city government names, municipal names, area names, etc., however, the embodiment is not so limited.

Furthermore, the next time the map information browse detection unit 25 detects that map information is browsed, the map information browse detection unit 25 checks the map information against map information browsing history stored in the storage unit 23 based on the location word, the URL, etc., and updates the corresponding history information.

The map information attention level extraction unit 26 extracts the attention degree (attention level) of the user with respect to predetermined map information obtained by the map information browse detection unit 25. The attentional level to the map information may be obtained by using at least one of, for example, the number of times of browsing the same map information, the browsing time, whether there is an enlarging or a reducing operation and the number of times of operations, whether the map is printed, etc.; however, the embodiment is not so limited.

Furthermore, the map information attention level extraction unit 26 receives, as map information browsing history from the map information browse detection unit 25, the URL, the location word, the latest browsing time, the total browsing time, the number of browsing times, and the number of times of changing the size (enlarge/reduce), relevant to the map. Furthermore, the map information attention level extraction unit 26 calculates the above-described attention level by using the received map information browsing history, and stores the map information browsing history, etc., together with the calculated attention level, in the storage unit 23.

The location information detection unit 27 extracts the text (for example, the title, the header, and the body text of the HTML) of the web page for which browsing has been detected, and performs a process of leaving a space between words in the text. As the process of leaving a space between words, for example, morphological analysis may be used; however, the embodiment is not so limited.

Furthermore, from the result of the process of leaving a space between words, the location information detection unit 27 extracts a keyword, etc., relevant to the geographical name set in advance, and stores the extracted keyword as the location word in the storage unit 23 together with the URL of the web page being browsed and the browse start time.

Furthermore, when the text of the web page includes a plurality of the prefectural and city government names and municipal names, the location information detection unit 27 evaluates the importance, etc., of the location word based on the appearance frequency, the font size, the color, etc., extracts one or more location words determined to have a high level of importance, and stores the extracted location word in the storage unit 23. Note that having a high level of importance means that, for example, the appearance frequency is higher than a predetermined number of times, the font size is larger than a predetermined value, etc.; however, the embodiment is not so limited; the high level of importance may correspond to a combination of the appearance frequency, the font size, the color, etc.

Furthermore, the next time the location information detection unit 27 detects the location information, the location information detection unit 27 checks the location information against the web page browsing history stored in the storage unit 23 based on the location word, the URL, etc., and updates the corresponding browsing history.

When the location information detection unit 27 is able to detect the location information (location word) from the web page, the web page attentional level extraction unit 28 obtains the attention level with respect to the web page being browsed, and extracts the web page that the user is interested in. Here, the attention level with respect to the web page may be obtained from, for example, the browsing time and the number of times of browsing the web page, the number of times of transiting between windows, the browsing time and the number of times of browsing a URL of a relevant top site, etc.; however, the embodiment is not so limited. Here, a relevant top site means, for example, the topmost site of the same URL, etc.; however, the embodiment is not so limited.
17:00

The web page attentional level extraction unit 28 may extract the attention level assuming that, for example, the longer the browsing time and the larger the number of times of browsing the web page, the higher is the attention level of the user. Furthermore, as the elapsed time from the first time of browsing the history becomes longer, the web page attentional level extraction unit 28 may decrease the attention level.

Furthermore, the web page attentional level extraction unit 28 receives, as web page browsing history from the location information detection unit 27, the URL, the location word, the latest browsing time, the total browsing time, the number of browsing times, and the number of times of changing the size (enlarge/reduce), relevant to the location information. Furthermore, the web page attentional level extraction unit 28 calculates the above-described attention level by using the received web page browsing history, and stores the web page browsing history, etc., in the storage unit 23 together with the calculated attention level.

The browsing history classification unit 29 is a classifying unit for classifying, for example, the browsing history for each location word based on the attention level obtained from either one or both of the map information attention level extraction unit 26 and the web page attentional level extraction unit 28. For example, the browsing history classification unit 29 extracts the final attention level relevant to the location, from the attention level of a map site including a predetermined location word and the attention level of a web page including the same location word. Furthermore, when the attention level is greater than or equal to a threshold set in advance, the browsing history classification unit 29 stores the web page and map information as an example of browsing history corresponding to the location word, in the storage unit 23, together with the location word. Note that the above-described browsing history may be one of or both of the web page and the map information.

Note that in the first embodiment, a plurality of the web pages and map information items may be stored for the same location word. In this case, in the first embodiment, the web pages are sorted and classified in a predetermined order, such as in a descending order according to the attention level or a descending order according to how recent the date/time is.

The presenting unit 30 extracts browsing history corresponding to a predetermined location word from the storage unit 23 and presents the extracted browsing history to the user, when the user, etc., has given an instruction, etc., to present the classification result of the browsing history, etc. The contents to be presented are, for example, information (for example, a URL, etc.) relevant to a web page including the location word classified by the above-described browsing history classification unit 29, and the web page itself, and the presenting is performed by displaying this information on the output unit 22, etc.

Note that the presenting unit 30 may perform the above-described presenting process based on an instruction from the user; however, the embodiment is not so limited. For example, the presenting unit 30 may present browsing history corresponding to the present position (position information) of the client terminal 11 that is positioned by, for example, a Global Positioning System (GPS) function, etc., provided in the client terminal 11. In this case, the presenting unit 30 may present, with high priority, the classification result of a location near the present position of the user.

Furthermore, when presenting the web pages, for example, the web pages classified according to the location word may be presented in a predetermined order, such as a classification order by the number of pages, a classification order by how recent the browsing date/time is, and a classification order by the descending order according to the attention level; however, the embodiment is not so limited.

The transmission/reception unit 31 is a communication unit for performing, for example, transmission/reception of data with an external device such as the web server 12, etc., via the communication network 13. The transmission/reception unit 31 may receive various kinds of information, etc., already stored in an external device, etc., and may send a result obtained by processing by the client terminal 11 to the external device, etc., via the communication network 13.

The control unit 32 controls all of the respective elements of the client terminal 11. Specifically, the control unit 32 implements the respective control operations relevant to reference to the browsing history, based on an instruction from the user, for example. Here, the respective control operations are, for example, detecting a browsing operation at the above-described browse operation detection unit 24, detecting browsing of map information at the map information browse detection unit 25, extracting the attention level with respect to browsed map information at the map information attention level extraction unit 26, etc. Furthermore, the respective control operations are, for example, detecting location information at the location information detection unit 27, extracting the attention level with respect to a browsed web page at the web page attentional level extraction unit 28, classifying the browsing history at the browsing history classification unit 29, presenting the browsing history by the presenting unit 30, etc.; however, the embodiment is not so limited.

These control operations may be performed based on execution of a program, and execution of a predetermined event or command, etc., according to an instruction by an administrator, etc.; however, the embodiment is not so limited.

### <Example of hardware configuration of client terminal 11>

Here, in the above-described client terminal 11, it is possible to realize the browsing history classification process according to the first embodiment, by generating an execution program (browsing history classification program) by which a computer may be caused to execute the respective functions, and installing the execution program in, for example, a general-purpose PC or a server, etc. Here, a description is given, with reference to a drawing, of an example of a hardware configuration example of a computer by which the browsing history classification process according to the first embodiment may be realized.

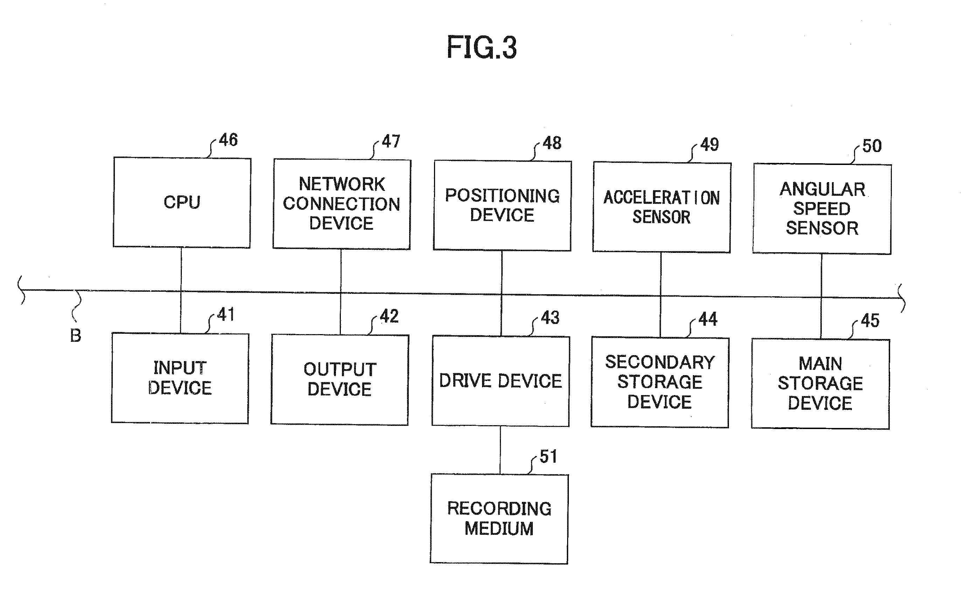

FIG. 3 is a diagram indicating an example of a hardware configuration by which the browsing history classification process may be realized. The computer main unit in FIG. 3 includes an input device 41, an output device 42, a drive device 43, a secondary storage device 44, a main storage device 45, a central processing unit (CPU) 46, a network connection device 47, a positioning device 48, an acceleration sensor 49, and an angular speed sensor 50, which are interconnected by a system bus B.

The input device 41 includes, for example, a keyboard and a pointing device such as a mouse, and a voice sound input device such as a microphone, operated by the administrator, etc., of the client terminal 11. The input device 41 inputs an instruction to execute a program from a user, etc., various kinds of operation information, setting information, information for activating software, etc.

The output device 42 includes a display for displaying various windows and data, etc., needed for operating the computer main unit for performing a process according to the first embodiment, and may display the execution progress and the result, etc., of a program, according to a control program of the CPU 46.

Here, in the first embodiment, the execution program installed in the computer main unit is provided by, for example, a portable recording medium 51, etc., such as a memory card and a Universal Serial Bus (USB) memory, etc. The recording medium 51 recording the program may be set in the drive device 43, and the execution program included in the recording medium 51 is installed from the recording medium 51 into the secondary storage device 44 via the drive device 43, based on control signals from the CPU 46.

The secondary storage device 44 stores the execution program according to the first embodiment, control programs provided in the computer, the execution progress and the execution result, etc., based on control signals from the CPU 46. Furthermore, the secondary storage device 44 may read and write the needed information from the various information items that are stored, based on control signals, etc., from the CPU 46.

Note that the secondary storage device 44 is, for example, a Hard Disk Drive (HDD), a Solid State Drave (SSD), etc., and corresponds to, for example, the above-described storage unit 23.

The main storage device 45 stores execution programs, etc., read from the secondary storage device 44 by the CPU 46. Note that the main storage device 45 is, for example, a Read Only Memory (ROM), a Random Access Memory (RAM), etc.

The CPU 46 may realize various processes by controlling the processes of the entire computer, such as various operations and input and output of data between the respective hardware elements, etc., based on a control program such as the operating system, etc., and execution programs stored in the main storage device 45. Note that various kinds of information, etc., needed during the execution of a program may be acquired from the secondary storage device 44, and the execution results, etc., may be stored.

Specifically, for example, the CPU 46 executes a program installed in the secondary storage device 44 based on an instruction to execute the program obtained from the input device 41, etc., to perform a process corresponding to the program in the main storage device 45.

For example, the CPU 46 executes programs to implement control of, for example, the detecting of a browsing operation at the browse operation detection unit 24, the detecting of browsing of map information at the map information browse detection unit 25, etc. Furthermore, the CPU 46 executes programs to implement control of the extracting of an attention level with respect to browsed map information at the map information attention level extraction unit 26, the detecting of location information at the location information detection unit 27, the extracting of an attention level with respect to a browsed web page at the web page attentional level extraction unit 28, etc. Furthermore, the CPU 46 executes programs to implement control of the classifying of browsing history at the browsing history classification unit 29, the presenting of browsing history by the presenting unit 30, etc. Note that the processing contents at the CPU 46 are not limited to the contents described above. The contents executed by the CPU 46 (execution progress and execution results), etc., may be stored in the secondary storage device 44 according to need.

The network connection device 47 acquires, from an external device, etc., connected to the communication network 13, execution programs, software, various instructions, etc., by connecting to the communication network 13, etc., based on control signals from the CPU 46. Furthermore, the network connection device 47 may provide, to an external device, etc., the execution results obtained by executing a program or the execution program itself according to the first embodiment. Furthermore, for example, the network connection device 47 may acquire a predetermined web page of a destination, by connecting to the web server 12. Note that as the network connection device 47, for example, a communication unit that enables communication is included, such as Wi-Fi (registered trademark), Bluetooth (registered trademark), etc. Furthermore, the network connection device 47 may include a communication unit that enables communication with a telephone terminal.

The positioning device 48 functions as, for example, a GPS function, to receive GPS data sent from a GPS satellite and acquire positioning information (positioning coordinates) of the client terminal 11. Furthermore, other than performing positioning by using a GPS function, the positioning device 48 may acquire position information based on position information of a wireless base station, a relay device, etc., that perform transmission and reception of data. In this case, the position information may be the position information of the wireless base station, the relay device, etc.

The acceleration sensor 49 acquires the gravitational acceleration information for each of the three axial directions (X axis direction, Y axis direction, Z axis direction) of the client terminal 11, in time series per unit time. The angular speed sensor 50 acquires the rotation amount (orientation) when the client terminal 11 moves, in time series per unit time. That is to say, the acceleration sensor 49 and the angular speed sensor 50 are units for acquiring the position and the direction of the client terminal 11; but the position and the direction may be measured by other sensor systems, etc.

By the hardware configuration as described above, the browsing history classification process according to the first embodiment may be executed. Furthermore, by installing a program, the browsing history classification process according to the first embodiment may be easily realized by, for example, the client terminal 11-1, etc., as a mobile terminal.

Note that in the above example, a description is given of a hardware configuration of the client terminal 11-1 as a mobile terminal; however, the embodiment is not so limited; for example, the browsing history classification process according to the first embodiment may be realized by, for example, the client terminal 11-2, etc., as a fixed terminal such as a general-purpose PC, etc. As a hardware configuration with respect to the client terminal 11-2, among the elements indicated in FIG. 3 described above, the input device 41, the output device 42, the drive device 43, the secondary storage device 44, the main storage device 45, the CPU 46, and the network connection device 47 are included, and these are interconnected by a system bus B. Furthermore, the recording medium 51 may be, for example, a CD-ROM and a DVD, etc., other than the media described above. The hardware configuration with respect to the web server 12 is the same as the hardware configuration with respect to the client terminal 11-2, and therefore detailed descriptions are omitted herein.

### <Example of browsing history classification process>

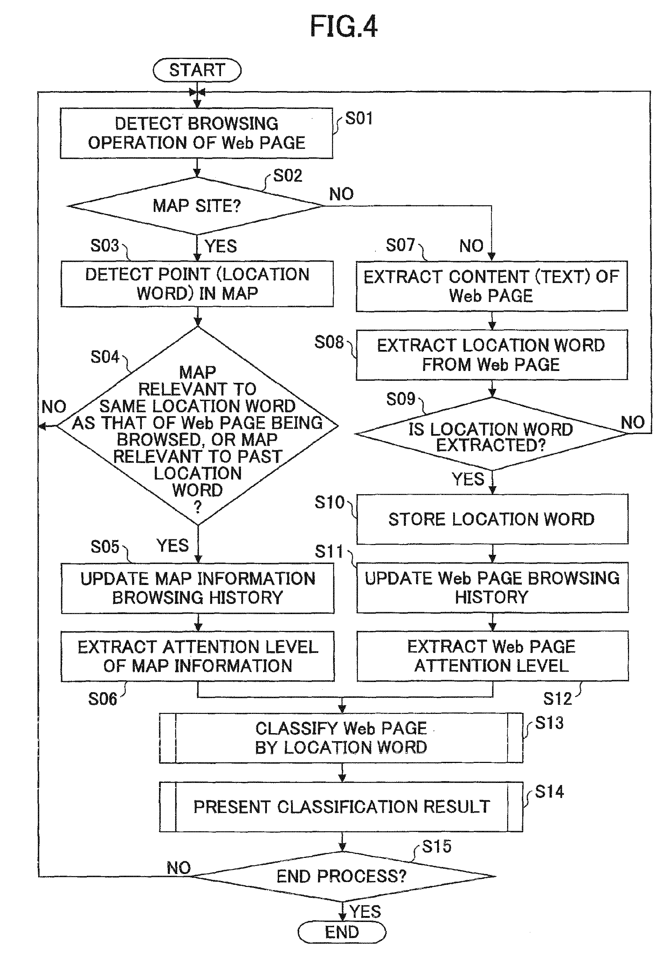

Next, a description is given of an example of a browsing history classification process according to the first embodiment, with reference to a flowchart. FIG. 4 is a flowchart indicating an example of a browsing history classification process according to the first embodiment. Note that in the example of FIG. 4, for example, the browsing history is classified by using the attention level of the map information and the attention level of the web page, and the result of the classification is presented to the user; however, the embodiment is not so limited; the browsing history may be classified by using only either one of the attention levels.

In the example of FIG. 4, in the browsing history classification process, a browsing operation of a web page is detected (S01). Here, a browsing operation is, for example, "a case of newly opening a web page by specifying the URL of the web page", "a case of opening a web page by specifying a link obtained from a search result for a web page", "a case of scrolling a web page", etc. Furthermore, other browsing operations are, for example, "a case of displaying information by switching the window and a tab of a web page", "a case of enlarging and reducing a page in a web page", "a case of printing a web page", etc.; however, the embodiment is not so limited.

At this time, a property, etc., for identifying the web page may also be acquired at the same time. The property of a web page is the URL and the title of the web page, the body text of the HTML, a URL embedded in the HTML, etc.; however, the embodiment is not so limited.

Next, in the browsing history classification process, it is determined whether the detected web page is a map site that is an example of map information (S02). The determination as to whether the web page is a map site may be made, for example, based on a URL of the web page, a URL embedded in the HTML of the web page, etc. For example, when the above-described URL matches a URL of a predetermined map site set in the map DB in advance, it may be determined that information relevant to the map is being browsed; however, the embodiment is not so limited.

In the browsing history classification process, in the process of S02 described above, when the web page is a map site (YES in S02), the point (location word) that is presently being browsed in the map site is detected (S03). The location word is extracted by, for example, acquiring an address, etc., by an inquiring format (for example, an address display request) that is set in advance in the map site, checking the acquired address against a geographical name dictionary, etc., stored in the storage unit 23 in advance, and extracting a keyword; however, the embodiment is not so limited. Note that a geographical name dictionary is, for example, a dictionary including geographical names, addresses, etc. Furthermore, in the process of S03, for example, the location word may be extracted by performing a process such as a process of leaving a space between words in the text included in the map site, etc.

Next, in the browsing history classification process, it is determined whether the map is relevant to the point of the same location word as that of a web page being browsed, or the map is relevant to the point of the same location word as that of a web page browsed in the past (step S04). Note that the web page being browsed means, for example, in the same session, or browsing a map site within a predetermined time from the end time of browsing of the web page, etc.; however, the embodiment is not so limited. Here, the it may be determined that the session is the same, for example, when the user has browsed a map site by tracking a link from a web page, and has browsed the map site within a predetermined time from the end time of browsing the web page. Note that the method of determining whether the session is the same is not so limited.

Furthermore, in the process of S04, for example, in the case of browsing a map of a point relevant to the same location word as that of the web page browsed in the past, when the location word matches at least at the level of a municipal name, it may be determined that a map of the same location word is browsed. The above-described level of a municipal name means, for example, when the location word includes "prefectural and city government name + municipal name + street address", the location word matches in terms of "prefectural and city government name + municipal name"; however, the embodiment is not so limited. Note that browsed in the past means, for example, that the web page has been browsed at a time before a predetermined time from the end time of browsing the web page, the web page has been browsed at a time set in advance (for example, one day ago, one week ago, one month ago), etc.; however, the embodiment is not so limited.

In the browsing history classification process, when the condition indicated in S04 described above is not satisfied (NO in S04), the process returns to the process of S01 (detection of browsing of a web page). Furthermore, in the browsing history classification process, when the condition indicated in S04 is satisfied (YES in S04), the browsing history relevant to this map site (map information browsing history) is updated and stored in the storage unit 23 (S05).

Note that in the map information browsing history, for example, a location ID relevant to the browsing of the map, a URL identifying the map site, the latest browsing date/time of the map site, the browsing time, the number of browsing times, the number of times of enlarging or reducing the map site, etc. are stored; however, the embodiment is not so limited.

Furthermore, in the map information browsing history, information may be stored such as whether the map site has been printed, a web page relevant to browsing the map site (for example, a web page browsed in the same session or within a predetermined time), a web page included in the browsing history of the same location ID, etc.

Next, in the browsing history classification process, the attention level of the map site (map information) is extracted (S06). Note that the attention level may be calculated based on, for example, a formula, etc., set in advance. For example, the attentional level is calculated by dividing the total browsing time of the target map site by the total browsing time of all map sites (total browsing time/∑ total browsing time), and the attention level is calculated by dividing the number of times of browsing the target map site by the number of times of browsing all web pages (number of browsing times/Σ number of browsing times). Furthermore, the method of calculating the attention level is not limited to the above; for example, a plurality of calculation results may be combined; when combining calculation results, the calculation maybe performed by applying a weight that is set in advance for each index such as the above-described browsing time and the number of browsing times, etc. Accordingly, for each map site, it is possible to quantify the level of interest of the user when browsing the map site. Note that the extracted attention level is stored in the map information browsing history.

Furthermore, in the browsing history classification process, in the process of S02, when the browsed web page is not a map site (NO in S02), the content (text) of the web page is extracted (S07). Furthermore, in the browsing history classification process, the location word is extracted from the extracted content of the web page (S08).

Next, in the browsing history classification process, it is determined whether a location word is extracted from a web page (S09). The determination of whether a location word is extracted is made by, for example, determining whether a location word has been extracted from the respective text information items such as a header and the body text, etc., included in the content of the web page. Furthermore, when extracting the location word, for example, a keyword, etc., relevant to a geographical name, etc., is extracted by checking a geographical name dictionary stored in the storage unit 23 in advance against the location word, and performing a process of leaving a space between words by morphological analysis, etc.

In the browsing history classification process, when a location word is not extracted (NO in S09), it is determined that a web page relevant to a destination is not being browsed, and the process returns to S01. Furthermore, in the browsing history classification process, when a location word is extracted (YES in S09), the location word is stored in the storage unit 23 (S10), and furthermore, the web page browsing history is updated and stored in the storage unit 23 (S11).

Next, in the browsing history classification process, the attention level of the web page including the location word is extracted (S12). Here, the attention level may be calculated based on a formula, etc., set in advance. For example, the attentional level is calculated by dividing the total browsing time of the target web page by the total browsing time of all web pages (total browsing time/Σ total browsing time), and the attention level is calculated by dividing the number of times of browsing the target web page by the number of times of browsing all web pages (number of browsing times/Σ number of browsing times).

Furthermore, the method of calculating the attention level is not limited to the above; for example, a plurality of calculation results may be combined; when combining calculation results, the calculation maybe performed by applying a weight that is set in advance to each index such as the above-described browsing time and the number of browsing times, etc. Accordingly, for each web page, it is possible to quantify the level of interest of the user when browsing the web page.

Next, in the browsing history classification process, after the processes of S06 and S12 described above end, a classification process is performed, of classifying the web page by the location word (S13). Note that a specific example of the classification process is described below. The classification result is stored in the storage unit 23, etc.

Furthermore, in the browsing history classification process, a process of presenting the classification result is performed based on an instruction to present the browsing history from a user, etc. (S14). Note that a specific example of the presentation process is described below.

In the browsing history classification process, it is determined whether to end the process (S15), and when the process is not to be ended (NO in S15), the process returns to the process of S01. Furthermore, in the browsing history classification process, when the process is to be ended according to an instruction from the user or other timings, etc. (YES in S15), the browsing history classification process ends. Note that the above-described browsing history classification process does not have to include the presentation process of S14 described above.

### <S13: Regarding classification process>

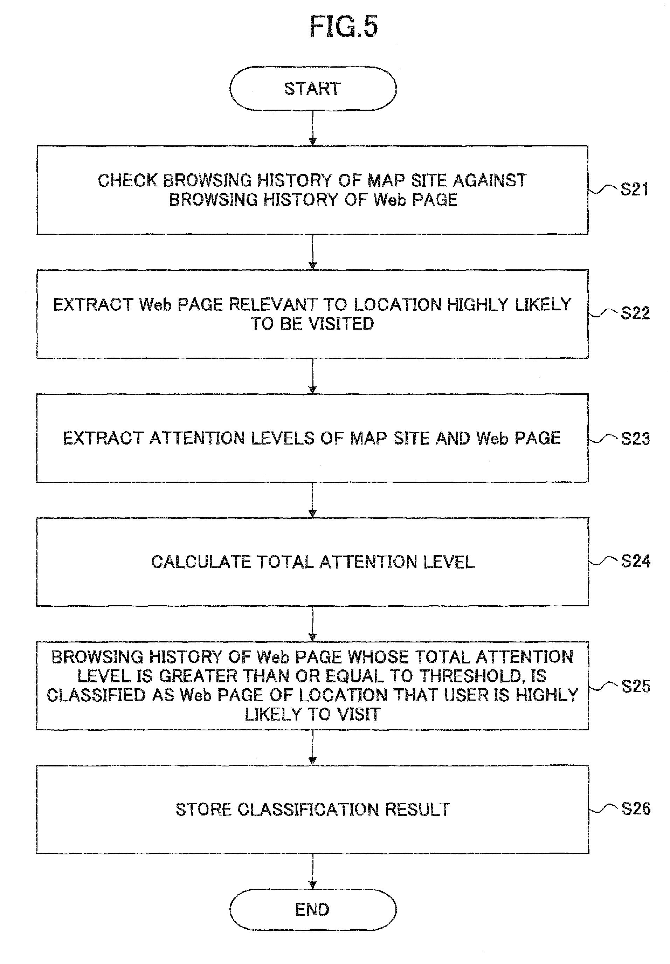

Next, a specific description is given of the classification process of S13 described above, with reference to a flowchart. FIG. 5 is a flowchart indicating an example of a classification process.

In the classification process indicated in the example of FIG. 5, first, the browsing history of the map site described above and the browsing history of the web page are checked against each other (S21), and a web page relevant to a location that is highly likely to be visited, is extracted (S22) .

Next, in the classification process, for example, the location ID included in the browsing history of the web page and the browsing history of the map site having the same relevant URL are combined, and the respective attention levels of the map site and the web page are extracted (S23).

Furthermore, in the classification process, the overall attention level (total attention level) based on the location word, etc., is obtained by using a formula, etc., set in advance, with respect to the attention levels extracted by the process of S23 (S24). Specifically, for example, by multiplying the attention level of the web page by the attention level of the map site, it is possible to obtain the total attention level; however, the embodiment is not so limited; for example, the total attention level may be calculated by applying a weight, etc., with respect to the respective attention levels.

Next, in the classification process, for example, the browsing history of a web page, whose total attention level obtained by the process of S24 is greater than or equal to a threshold set in advance, is classified in association with the location word, as a web page of a location that is highly likely to be visited by the user (S25). Furthermore, in the classification process, the obtained classification result is stored in the storage unit 23, etc. (S26).

### <S14: Regarding presentation process>

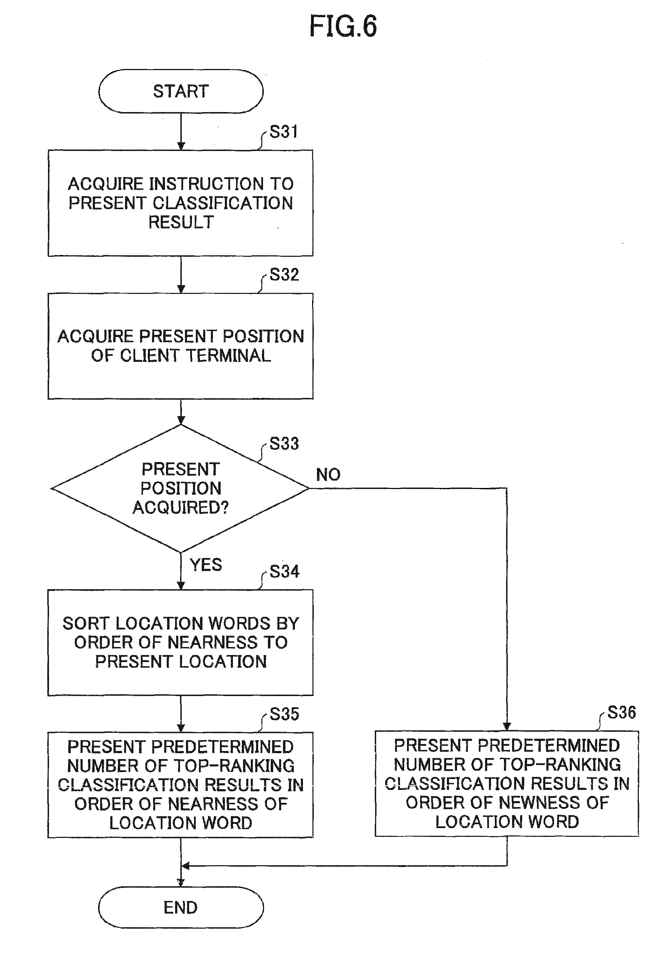

Next, a specific description is given of the presentation process of S14 described above, with reference to a flowchart. FIG. 6 is a flowchart indicating an example of a presentation process. Note that in FIG. 6, as one example, a description is given of a case where the client terminal 11 is a mobile terminal.

In the presentation process indicated in the example of FIG. 6, for example, when an instruction to present the classification result of the web page, etc., is acquired, by an operation by the user, etc. (S31), the present position of the client terminal 11, by which the user, etc., has made the instruction, is acquired (S32). Note that the present position is acquired by a method of, for example, using the GPS function described above; however, the embodiment is not so limited; for example, the position information of a wireless base station and a relay device, that perform transmission and reception of data, may be acquired.

Next, in the presentation process, it is determined whether the present position has been acquired by the process of S32 (S33). In the presentation process, when the present position has been acquired (YES in S33), the classification results stored in the storage unit 23 are sorted in a descending order according to the nearness of the location word (for example, a location ID corresponding to the location word) to the present position of the client terminal 11 at the top (S34).

Furthermore, in the presentation process, among the classification results that have been sorted in a descending order according to the nearness of the location word, a predetermined number of top-ranking classification results are presented (S35). Note that the presented classification results include, for example, information of web pages and map sites classified according to location words (location IDs), and information of the browsing date/time, etc.; however, the embodiment is not so limited.

Furthermore, in the presentation process, in the process of S33, when the present position has not been acquired (NO in S33), for example, among the classification results stored in the storage unit 23, a predetermined number of top-ranking classification results according to the newness of the location word, are presented (S36).

The order according to the newness of the location word described above indicates, for example, the order of being most recently browsed by the user, etc.; however, the embodiment is not so limited; for example, the user, etc., may specify a location word, and a predetermined number of top-ranking (for example, first through fifth, etc.) browsing history items with respect to the obtained location word may be presented.

Accordingly, in the first embodiment, it is possible to present a web page corresponding to a destination that is highly likely to be visited when the user goes out, from the browsing history of web pages. Therefore, the user is able to easily browse again the target web page, without organizing and searching for web pages by himself/herself. Note that the above-described presentation process is performed by, for example, the presenting unit 30.

Here, in the above-described presentation process, when the client terminal 11 is a fixed terminal, the client terminal 11 does not move, and therefore the process of acquiring the present position, etc., is not performed. In this case, after acquiring the presentation instruction of S31, a predetermined number of top-ranking classification results according to the newness of the location word of the process of S36, may be presented, the user, etc., may specify a location word, and the classification results according to the specified location word may be presented.

### <Example of data stored in storage unit 23>

Next, a description is given of examples of data stored in the storage unit 23, with reference to drawings.

### <Location word DB>

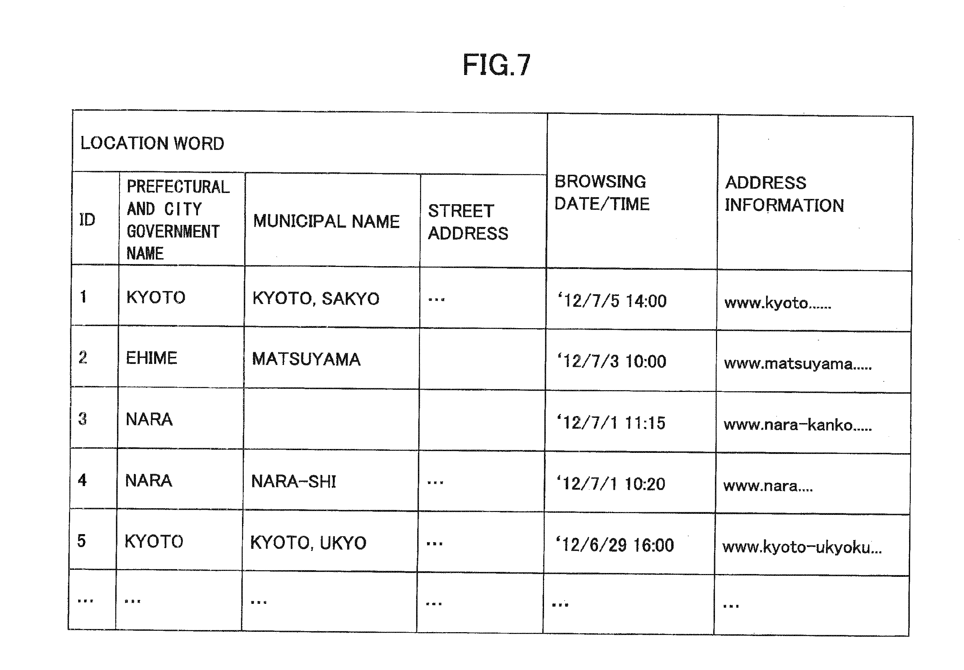

FIG. 7 is a diagram indicating an example of a location word DB. The location word DB is a DB for managing location words obtained from, for example, the browse operation detection unit 24, the map information browse detection unit 25, the location information detection unit 27, etc. Items of the location word DB indicated in FIG. 7 include, for example, "location word", "browsing date/time", "address information (URL)", etc.; however, the types and contents, etc., of the items are not so limited.

In the "location word", information for identifying a location, etc., is stored. Note that the "location word" includes, for example, "identification information (ID)", "prefectural and city government name", "municipal name", "street address" , etc., for identifying a location (for example, a geographical name, etc.); however, the embodiment is not so limited.

Furthermore, in the "browsing date/time", information of the date/time of browsing the browsing history (for example, a web page, etc.) including the location word, etc., is stored. In the "browsing date/time", the browse start date/time may be stored, or the browse end date/time may be stored, or both of these dates/times may be stored.

Furthermore, in the "address information", for example, the address information of the browsing history (for example, a web page) is stored. In the example of FIG. 7, the URL of the web page is stored as address information; however, the embodiment is not so limited; for example, when the web page is stored in the storage unit 23, etc., the address information of the storage destination may be stored.

Here, in the location word DB indicated in FIG. 7, for example, when web pages relevant to the same location word are browsed, the same ID (location ID) is assigned to the web pages. The determination of whether the location is the same may be made by, for example, determining that the location is the same when the keyword relevant to a location (for example, "prefectural and city government name + municipal name") matches; however, the embodiment is not so limited.

### <Example of map information browsing history>

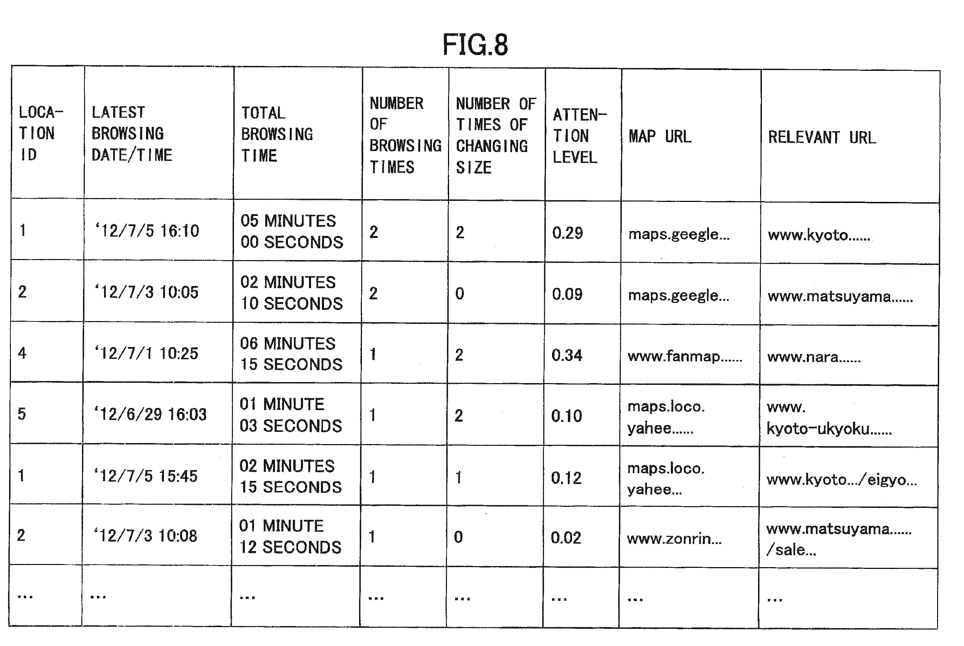

FIG. 8 is a diagram indicating an example of map information browsing history. The map information browsing history is, for example, information obtained by the map information browse detection unit 25 and the map information attention level extraction unit 26. Items of the map information browsing history include, for example, "location ID", "latest browsing date/time", "total browsing time", "number of browsing times", "number of times of changing size", "attention level", "map URL", "relevant URL", etc.; however, the types, the number, and contents, etc., of the items are not so limited.

In the "location ID", an ID, etc., corresponding to a location word is stored, when the location word corresponding to the map site matches the keyword in the location word DB described above. That is to say, the location word included in the map information browsing history is managed according to the ID.

Furthermore, in the "latest browsing date/time", the information of the date/time on which a map site, etc., has been most recently browsed, is stored. Therefore, when the same map site is newly browsed, the "latest browsing date/time" is updated by the date/time information of the newly browsed date/time. Note that in the "latest browsing date/time", the browse start date/time may be stored, or the browse end date/time may be stored, or both of these dates/times may be stored.

Furthermore, in the "total browsing time", the total browsing time of the map site, etc., is stored. Note that the browsing time is the time that the target web page is displayed on a screen, and even if the user is not actually viewing the screen, the displayed time is counted as the browsing time.

Furthermore, in the "number of browsing times", the number of times of browsing a map site, etc., is stored. When the same map site is newly browsed, the number of browsing times is updated (incremented by one).

Furthermore, in the "number of times of changing size", the number of times of the operations for enlarging and reducing a map, characters, etc., displayed in a map site, etc., is stored. Note that as the "number of times of changing size", the number of times of enlarging the size and the number of times of reducing the size may be separately stored, or the number of times of either one of enlarging the size or reducing the size may be stored. When the map information included in the map site is enlarged or reduced, the "number of times of changing size" is updated (incremented by one).

Furthermore, in the "attention level", the attention level with respect to browsing the map site, etc., is stored. The attention level may be obtained based on a formula, etc., set in advance. For example, in the first embodiment, as described above, "total browsing time/Σ total browsing time", "number of browsing times/Σ number of browsing times", etc., may be used to calculate the attention level.

Specifically, for example, a formula set in advance such as "attention level=a₁(total browsing time/Σ total browsing time)+a₂ (number of times of changing size/Σ number of times of changing size)", etc., may be used to obtain the attention level; however, the formula is not so limited. Furthermore, the above-described a₁, a₂ indicate weighting coefficients, and may be set as, for example, a₁=0.5, a₂=0.5, etc.; however, the embodiment is not so limited. Accordingly, for each map site, it is possible to quantify the level of interest of the user when browsing the map site, by the attention level. Note that the attention level may be calculated every time the data is updated, or may be calculated at predetermined timings (for example, every day, every week).

Furthermore, in the "map URL", address information (for example, a URL) for identifying the map site, etc., is stored. For example, in the "relevant URL", the address information (for example, a URL), etc., of a web page relevant to the browsing of the map site (for example, a web page browsed in the same session or within a predetermined time) or a web page included in the web page browsing history of the same location ID, is stored.

Note that in the map information browsing history indicated in FIG. 8, there are cases where a plurality of records indicating the same location ID are included. This is because, for example, even when the keyword of the location word is the same, the map URL, etc., may be different. That is to say, even for the same location, when the map URL, etc., is different, different records are stored.

Note that the above-described "total browsing time" corresponds to all browsing times in the past; however, the embodiment is not so limited; for example, the total browsing time may be sectioned into a certain time period, such as the past one month or the past year, by using the "latest browsing time" as a standard. In this case, the "number of browsing times" and the "number of times of changing size" in the sectioned certain period, are stored.

### <Example of web page browsing history>

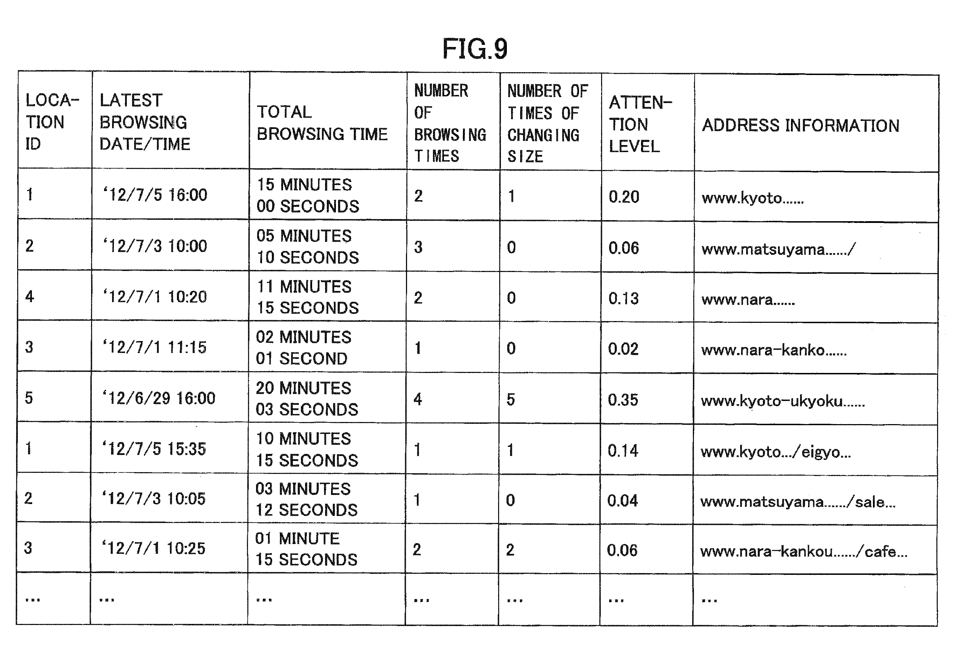

FIG. 9 is a diagram indicating an example of web page browsing history. The web page browsing history is information obtained by, for example, the location information detection unit 27 and the web page attentional level extraction unit 28. In the first embodiment, the browsing history of a web page including a location word is stored.

Items of the web page browsing history indicated in the example of FIG. 9 include, for example, "location ID", "latest browsing date/time", "total browsing time", "number of browsing times", "number of times of changing size", "attention level", "address information", etc.; however, the types, the number, and contents, etc., of the items are not so limited.

In the "location ID", an ID, etc., corresponding to a location word is stored, when the location word corresponding to the web page matches the keyword in the location word DB described above. That is to say, the location word included in the web page browsing history is managed according to the ID.

Furthermore, in the "latest browsing date/time", the date/time information of most recently browsing a web page, etc., is stored. Therefore, when the same web page is newly browsed, the "latest browsing date/time" is updated by the date/time information of the newly browsed date/time. Note that in the "latest browsing date/time", the browse start date/time may be stored, or the browse end date/time may be stored, or both of these dates/times may be stored.

Furthermore, in the "total browsing time", the total browsing time of the web page, etc., is stored. Note that the browsing time is the time that the target web page is displayed on a screen, and even if the user not actually viewing the screen, the displayed time is counted as the browsing time.

Furthermore, in the "number of browsing times", the number of times of browsing a web page, etc., is stored. When the same web page is newly browsed, the number of browsing times is updated (incremented by one). For example, the "number of browsing times" is counted when the user has moved from another web page to the target web page, or when the browsing software is activated in a case where a web page is set to be displayed as the "home" when the browsing software such as a web browser is activated, etc.

Furthermore, in the "number of times of changing size", the number of times of the operations for enlarging and reducing a map, characters, etc., displayed in a web screen, etc., is stored. Note that as the "number of times of changing size", the number of times of enlarging the size and the number of times of reducing the size may be separately stored, or the number of times of either one of enlarging the size or reducing the size may be stored. When the web page is enlarged or reduced, the "number of times of changing size" is updated (incremented by one).

Furthermore, in the "attention level", the attention level with respect to browsing the web page, etc., is stored. The attention level may be obtained based on a formula, etc., set in advance. For example, in the first embodiment, as described above, "total browsing time/Σ total browsing time", "number of browsing times/Σ number of browsing times", etc., may be used to calculate the attention level.

Specifically, for example, a formula set in advance such as "attention level=b₁(total browsing time/Σ total browsing time)+ b₂(number of times of changing size/Σ number of times of changing size)", etc., may be used to obtain the attention level: however, the formula is not so limited. Furthermore, the above-described b₁, b₂ indicate weighting coefficients, and may be set as, for example, b₁=0.8, b₂=0.2, etc.; however, the embodiment is not so limited. Accordingly, for each web page, it is possible to quantify the level of interest of the user when browsing the web page, by the attention level. Note that the attention level may be calculated every time the data is updated, or may be calculated at predetermined timings (for example, every day, every week).

Furthermore, in the "address information", information identifying a web page is stored. Note that as the address information, there is a URL, etc.; however, the embodiment is not so limited; for example, the "address information" may be a storage destination address in the storage unit 23, etc., described above.

Note that in the browsing history indicated in FIG. 9, for example, when web pages having the same location ID have a common top layer in the hierarchy of the URL, the web pages may be collectively stored by the top layer. For example, a web page having address information of "http://www.OOO.co.jp/kitazenji/tizu.html", and a web page having address information of "http://www.OOO.co.jp/kitazenji/map-001.html" are browsed. At this time, when both web pages have the same location word, the address information up to the common URL (http://www.OOO.co.jp/kitazenji/) is stored as the URL (address information) of these web pages, and a number of browsing times, etc., obtained by integrating the numbers of these web pages, may be stored.

Note that, as for the web page browsing history indicated in FIG. 9, for example, the history corresponding to a number of days set in advance may be stored, reused according to need, and updated in accordance with the web page browsing status by the user. That is to say, the above-described "total browsing time" is all of the past browsing times; however, the embodiment is not so limited; for example, the total browsing time may be sectioned into a certain time period, such as the past one month or the past year, by using the "latest browsing time" as a standard. In this case, the "number of browsing times" and the "number of times of changing size" in the sectioned certain period are stored.

### <Example of classification results>

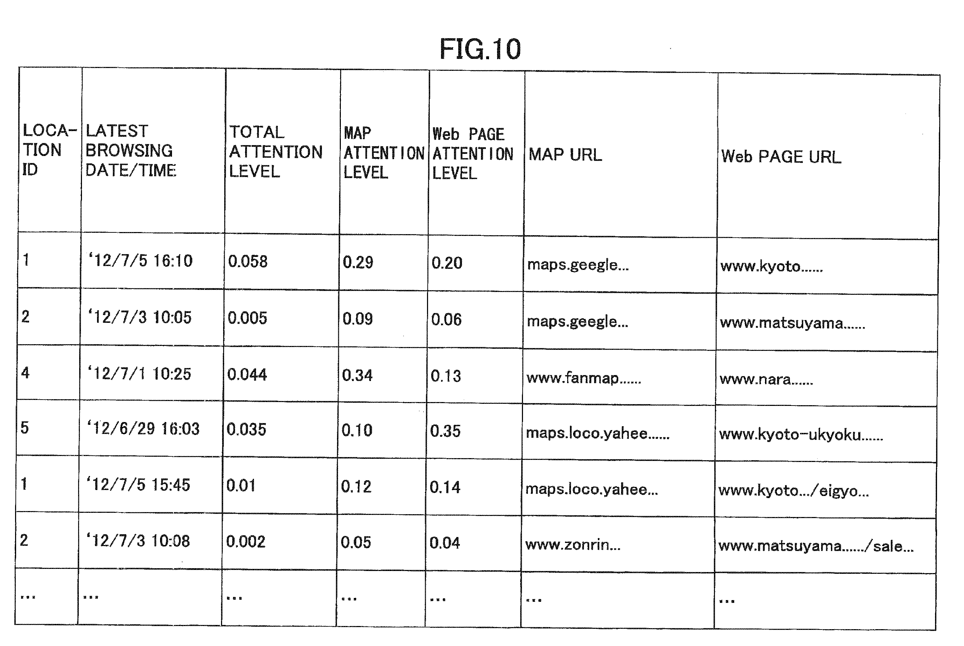

FIG. 10 is a diagram indicating an example of classification results. Items of the classification results indicated in FIG. 10 include, for example, "location ID", "latest browsing date/time", "total attention level", "map attention level", "web page attention level", "map URL", "web page URL", etc.; however, the types, the number, and contents, etc., of the items are not so limited.

The classification results are obtained by the above-described browsing history classification unit 29, by checking the map site browsing history and the web page browsing history against each other, classifying the browsing history relevant to a location that is highly likely to be visited, and extracting the classified browsing history.

In the "location ID", identification information for identifying a location corresponding to the browsing history, is stored. Note that the location ID is the same identification information as the location ID included in the map information browsing history indicated in FIG. 8 and the web page browsing history indicated in FIG. 9, described above.

Furthermore, in the "latest browsing date/time", the information of the date/time on which the address information of a map site (map URL) or a web page (for example, web page URL) corresponding to the location ID, has been most recently browsed, is stored.

Furthermore, in the "total attention level", the attention level of the total browsing history (for example, web page) obtained by using the values of the above-described "map attention level" and "web page attention level", is stored.

Furthermore, the "map URL" is address information included in the map history indicated in FIG. 8 described above. Furthermore, the "web page URL" is address information included in the web page browsing history indicated in FIG. 9 described above.

Here, as the "total attention level" indicated in FIG. 10, for example, the browsing history of a map site and the browsing history of a web page having the same location ID and the same address information as that of the map site (for example, the same or a relevant URL, etc.) are combined, and the respective attention levels are used to obtain the overall attention level.

Specifically, for example, as indicated in FIG. 10, a map attention level and a web page attention level relevant to the same location ID and the same address information (for example, URL) are multiplied, to obtain the total attention level (total attention level = map attention level x web page attention level). Furthermore, in the first embodiment, it is determined whether this total attention level is greater than or equal to a threshold set in advance, and the web page browsing history having an attention level that is greater than or equal to the threshold is classified as a web page relevant to a location that is highly likely to be visited by a user, and the classification result is stored in the storage unit 23. Accordingly, it is possible to store, as the classification result, only the web page browsing history having an attention level that is greater than or equal to the threshold, and therefore the storage capacity of the storage unit 23 may be reduced. Note that the first embodiment is not so limited; all of the results of calculating the total attention level may be stored in the storage unit 23.

### <Example of presentation screen>

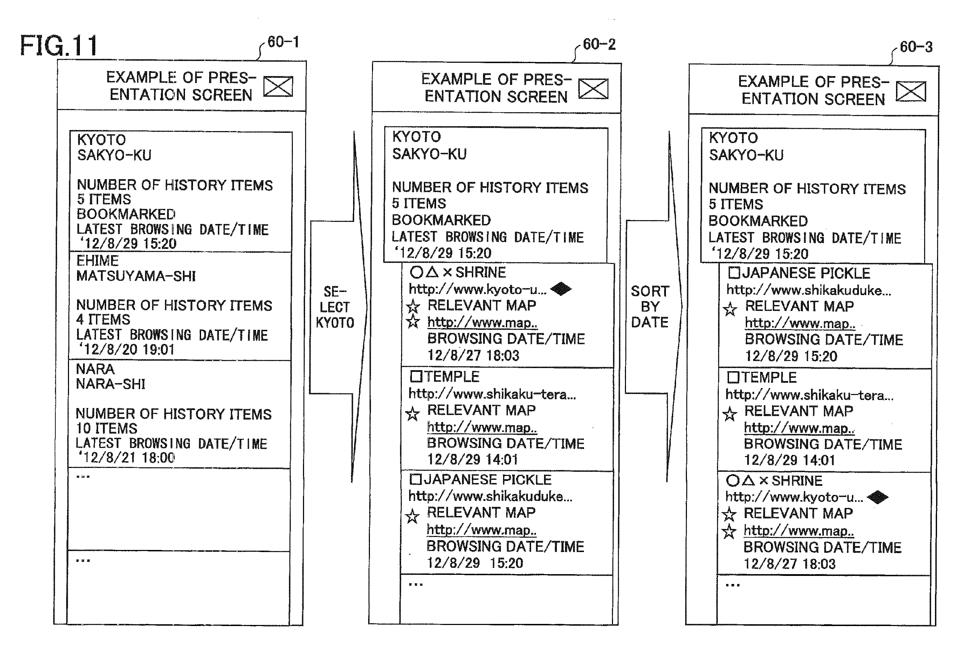

Here, a description is given, with reference to a drawing, of an example of a screen presented in response to an instruction to present the classification results, given by the user with the use of the client terminal 11. FIG. 11 is a diagram indicating an example of a screen presented when browsing again the browsing history, etc.

In the example of FIG. 11, for example, when the user, etc., gives an instruction to present the web page classification result, etc., by the client terminal 11 such as a mobile terminal, etc., the instruction is acquired, and the present position information of the client terminal 11 is acquired.

Next, the client terminal 11 acquires a location word corresponding to the acquired present position information, and extracts the above-described classification result corresponding to the acquired location word, from the storage unit 23. Note that the extracted classification result may be a classification result corresponding to a location word matching the acquired location word, or may be a classification result corresponding to a location word of a location near the position of the acquired location word.

Note that as the classification result obtained from the storage unit 23, for example, various types of information are acquired from the classification result, such as the number of browsing history items stored with respect to the location, the last date/time on which the web page has been browsed (latest browsing date/time), and whether there is a page of the history destination that is bookmarked by the user, etc., and the acquired information is displayed on a screen of the output unit 22, according to the example of the presentation screen as indicated in a screen 60-1. The above-described bookmark means a function of registering the URL of an arbitrary web site in the web browser. By registering a URL, it is possible to move to the corresponding web page simply by selecting the registered URL, and there is no need to input a URL in the address field of a web browser every time.

Note that location words may be displayed by being sorted in an order according to a predetermined condition, such as "number of history items", "latest browsing date/time", "total sum of attention levels of history", "nearness to present position", etc., included in the storage unit 23.

For example, the history included in the selected location word is displayed, and the web page of each history item, the URL to the map page, the browsing date/time, the attention level, whether the web page is bookmarked, etc., are acquired from the classification result, and the acquired information is displayed. Note that in the example of FIG. 11, the attention level is expressed by a "☆ (star)" mark, and the more the number of stars, the higher is the attention level. Furthermore, whether a bookmark is set is expressed by whether there is a "◆ (solid diamond)" mark. Therefore, in the first embodiment, the location words may be displayed by being sorted in a predetermined order, according to a specification by the user with the use of the above-described items.

For example, in the first embodiment, as indicated in the screen 60-1 indicated in FIG. 11, in association with the location ID of a location near the present position, the browsing history items of "Kyoto, Sakyo-ku", "Ehime, Matsuyama-shi", and "Nara, Nara-shi" are presented.

When the user selects "Kyoto" from the information presented in the screen 60-1, as indicated in a screen 60-2, the contents of five history items are displayed in a predetermined order (for example, in a descending order according to attention level). The screen 60-2 displays information corresponding to the keywords included in the browsed web pages, such as "○Δ× shrine", "□ temple", and "□ Japanese pickles".

Furthermore, in the first embodiment, when a user operation is performed and an instruction to sort the presented contents by date/time is acquired, as indicated in a screen 60-3, the browsing history items are displayed, which have been sorted in an order (descending order) according to how recent the browsing date/time is (browse start date/time). Note that the sorting is not so limited; the browsing history items may be sorted based on other conditions (for example, the number of browsing times), etc. Accordingly, for example, as the browsing history selected based on the attention level, etc., is presented as indicated in the screen 60-2 and the screen 60-3, the user is able to select one browsing history item from among the presented browsing history, and appropriately browse again, for example, a web page, etc., of the target destination.

Accordingly, it is possible to appropriately present a web page of a location that is highly likely to be visited when the user goes out, from among the web page browsing history. Therefore, the user is able to easily browse again the target web page, without organizing and searching for web pages by himself/herself.

### <Regarding location information (location word)>

Here, in the location information according to the first embodiment described above, as indicated in FIG. 7 described above, one location ID is set with respect to "prefectural and city government name + municipal name + street address"; however, the embodiment is not so limited. For example, a hierarchized location ID may be set for each area, such as for each prefectural and city government and for each prefectural and city government. As described above, by managing the hierarchized location IDs, the browsing history items may be classified and presented according to more segmentalized areas (regions), such that the target browsing history may be browsed again.

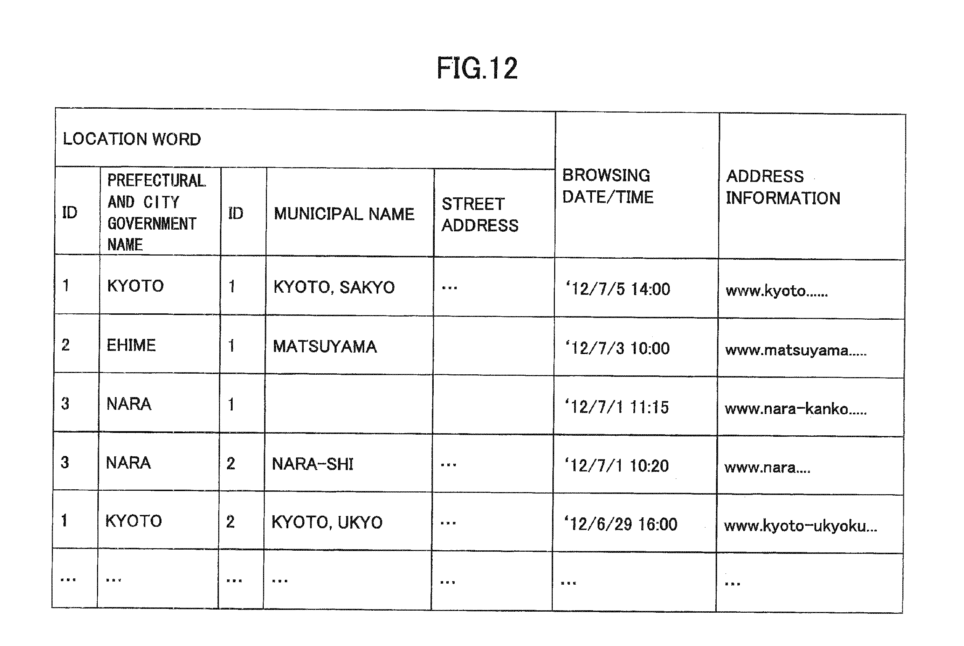

Here, FIG. 12 is a diagram indicating an example of a location word DB having a plurality of hierarchical layers. Compared to the location word DB indicated in FIG. 7 described above, in the location word DB indicated in FIG. 12, for example, location IDs are set hierarchically, in units of predetermined areas, such as for every prefectural and city government name and every municipal name.

For example, in the example of FIG. 12, the location IDs are managed such that for the location ID "1-1", the prefectural and city government name is "Kyoto" and the municipal name is "Kyoto, Sakyo-ku", and for the location ID "1-2", the prefectural and city government name is "Kyoto" and the municipal name is "Kyoto, Ukyo-ku". As indicated in FIG. 12, by managing the location IDs by setting hierarchized location IDs, the "location IDs" of the map history indicated in FIG. 8 and the web page browsing history indicated in FIG. 9 described above, may be stored respectively for the browsing history items of a plurality of hierarchical layers. Therefore, it is possible to browse again a web page, etc., corresponding to the browsing history of the classification result with respect to a location word of a location that is even more nearer to the present position of the client terminal 11.

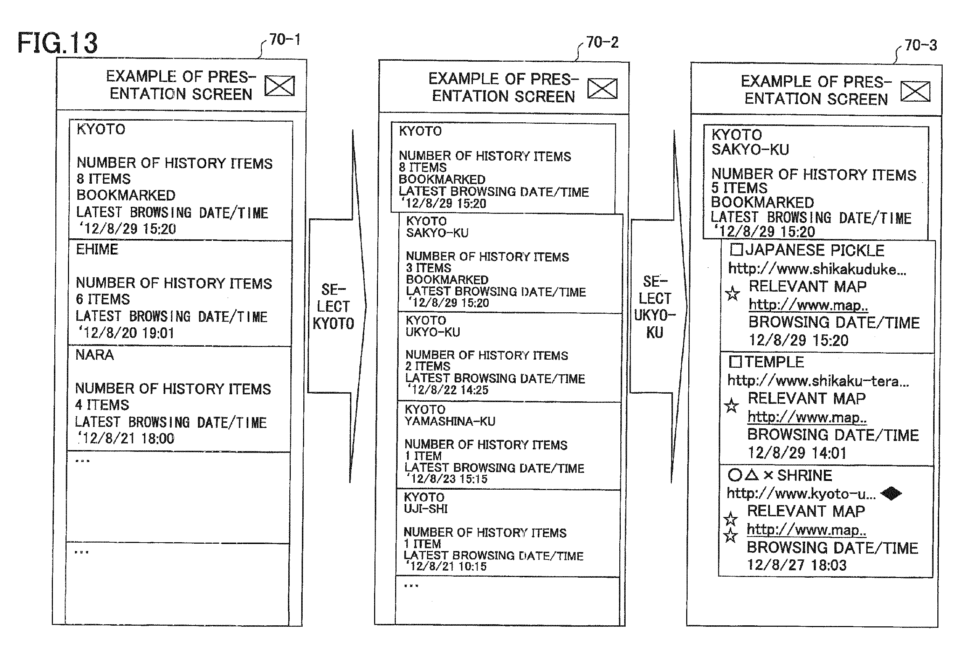

Here, FIG. 13 is a diagram indicating an example of a presentation screen using a location word DB including a plurality of hierarchical layers. In the example of FIG. 13, in the example of a presentation screen indicated in a screen 70-1, the above classification results are presented, based on the location IDs corresponding to the prefectural and city government names.

Here, the user selects "Kyoto" from among "Kyoto", "Ehime", and "Nara" presented in the screen 70-1. Accordingly, as indicated in a screen 70-2, the segmentalized classification results are presented, based on the location IDs of lower hierarchical layers belonging to "Kyoto" (for example, municipal names). For example, in the example of FIG. 13, as the screen 70-2, for example, "Sakyo-ku", "Ukyo-ku", "Yamashina-ku", "Uji-shi", etc., may be presented.

Furthermore, according to a specification by the user, "Sakyo-ku" is selected from among "Kyoto Sakyo-ku", "Kyoto Ukyo-ku", "Kyoto Yamashina-ku", "Kyoto Uji-shi", etc., presented in the screen 70-2. Accordingly, as indicated in a screen 70-3, with respect to the location word "Kyoto Sakyo-ku", it is possible to present the results based on the attention level in a predetermined order.

That is to say, as indicated in FIG. 13, the user interface for presentation is also hierarchized, and first, hierarchical layers corresponding to the respective prefectural and city governments are displayed, and then hierarchical layers corresponding to the respective municipalities are displayed, and lastly, the classified history is displayed.

### <Regarding calculation of attention level>

In the first embodiment described above, when calculating the attention level from the map information browsing history and the web page browsing history, information such as the total browsing time and the number of browsing times, are used to calculate the attention level; however, the embodiment is not so limited. For example, the attention level may be calculated by using additional information with respect to various user operations, such as whether printing has been performed with respect to the target web page, addition of a bookmark (whether bookmarked), mail transmission, web sharing registration such as Evernote (registered trademark), etc.

### <Example of map information browsing history including additional information>

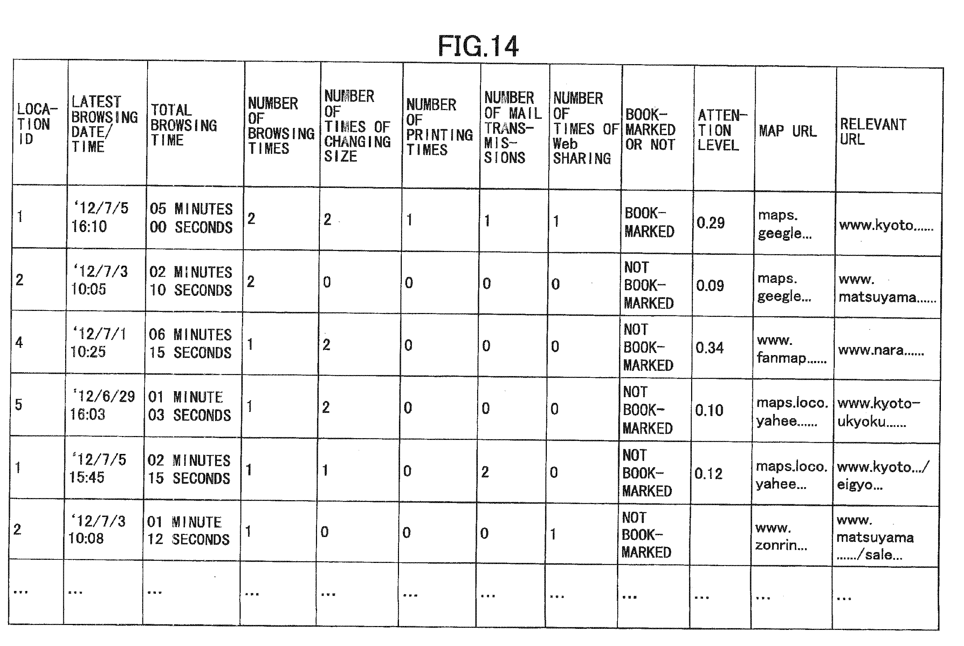

Here, FIG. 14 is a diagram indicating an example of map information browsing history including additional information. Items of the map information browsing history including additional information indicated in FIG. 14 include, for example, "location ID", "latest browsing date/time", "total browsing time", "number of browsing times", "number of times of changing size", "number of printing times", "number of mail transmissions", "number of times of web sharing", "bookmarked or not", "attention level", "map URL", "relevant URL", etc. Note that the types, the number, and contents, etc., of the items are not so limited.

In the example of FIG. 14, compared to the map information browsing history indicated in FIG. 8 described above, the items of "number of printing times", "number of mail transmissions", "number of times of web sharing", and "bookmarked or not" are added, other than the items indicated in FIG. 8. Note that in the present embodiment, among these additional information items, at least one information item is to be added, and other additional information items may be added.

In the "number of printing times", the number of times of printing the target map site associated with the location ID, the map URL, and the relevant URL, is statistically stored. Furthermore, in the "number of mail transmissions", the number of times the target map site has been mailed to a predetermined address, is statistically stored. Note that the predetermined address may be, for example, the same address or a different address.

Furthermore, in the "number of times of web sharing", the number of times of sharing a target map site by using, for example, a web sharing system such as Evernote, etc., is statistically stored. Furthermore, in "bookmarked or not", information indicating whether the target map site has been registered in a bookmark, is stored.

Here, the calculation of the attention level using the map information browsing history indicated in FIG. 14, is performed by including, for example, the contents of the additional information relevant to the user operation described above. For example, the attention level may be calculated by using "attention level=c₁(total browsing time/Σ browsing time)+c₂(number of times of changing size/Σ number of times of changing size)+c₃(number of printing times/Σ number of printing times)+c₄(number of mail transmissions/Σ number of mail transmissions)+c₅(number of times of web sharing/Σ number of times of web sharing)", etc.

Note that "number of printing times/Σ number of printing times" is obtained by dividing the number of times of printing a target map site included in the map information browsing history, by the total number of times of printing all sites. Furthermore, "number of mail transmissions/Σ number of mail transmissions" is obtained by dividing the number of times of transmitting a mail of the target map site included in the map information browsing history by the total number of mail transmissions of all sites. Furthermore, "number of times of web sharing/E number of times of web sharing" is obtained by dividing the number of times of web sharing of the target map site included in the map information browsing history by the total number of times of printing of all sites. Note that the calculation formula is not limited to the above.

Furthermore, the above-described c₁ through c₅ indicate weighting coefficients, and may be set as, for example, c₁, c₂=0.3, c₃=0.2, c₄, c₅=0.1; however, the embodiment is not so limited.

### <Example of web page browsing history including additional information>

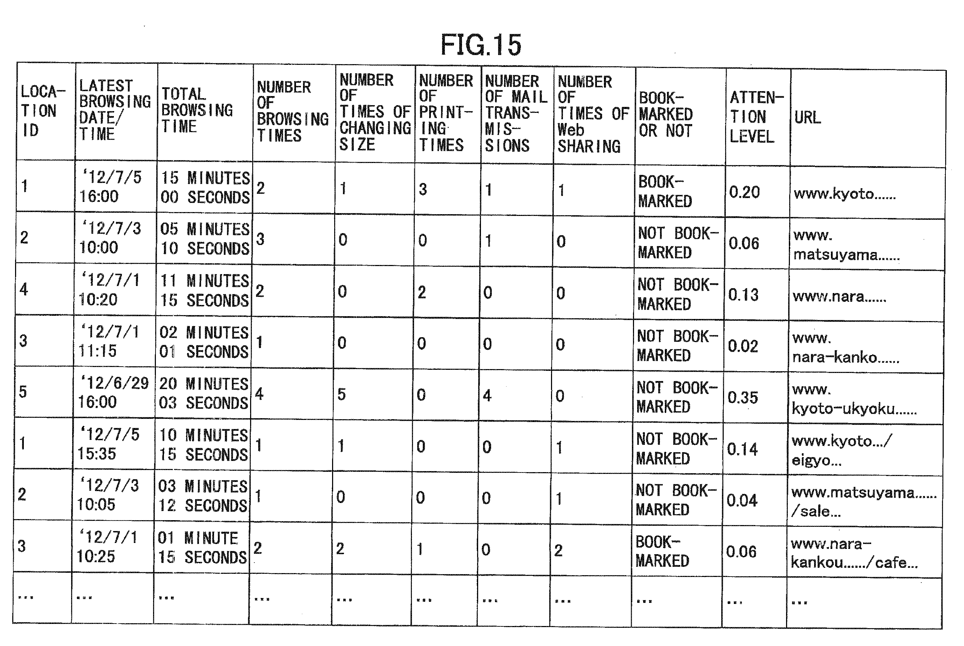

Furthermore, FIG. 15 is a diagram indicating an example of web page browsing history including additional information. Items of the web page browsing history including additional information indicated in FIG. 15 include, for example, "location ID", "latest browsing date/time", "total browsing time", "number of browsing times", "number of times of changing size", "number of printing times", "number of mail transmissions", "number of times of web sharing", "bookmarked or not", "attention level", "address information (for example, URL)", etc. Note that the types, the number, and contents, etc., of the items are not so limited.

In the example of FIG. 15, compared to FIG. 9 described above, the items of "number of printing times", "number of mail transmissions", "number of times of web sharing", and "bookmarked or not" are added, other than the items indicated in FIG. 9. Note that in the present embodiment, among these additional information items, at least one information item is to be added, and other additional information items may be added.

In the "number of printing times", the number of times of printing the target web page associated with the location ID and the URL is statistically stored. Furthermore, in the "number of mail transmissions", the number of times the target web page has been mailed to a predetermined address, is statistically stored.

Furthermore, in the "number of times of web sharing", the number of times of sharing a target web page by using, for example, a web sharing system such as Evernote, etc., is statistically stored. Furthermore, in "bookmarked or not", information indicating whether the web page has been registered in a bookmark is stored.

Here, the calculation of the attention level using the web page browsing history indicated in FIG. 15, is performed by including the contents of the additional information relevant to, for example, the user operation described. For example, the attention level may be calculated by using "attention level=d₁(total browsing time/E browsing time)+d₂ (number of times of changing size/Σ number of times of changing size)+d₃(number of printing times/Σ number of printing times)+d₄(number of mail transmissions/Σ number of mail transmissions)+d₅(number of times of web sharing/Σ number of times of web sharing)", etc.

Note that "number of printing times/Σ number of printing times" is obtained by dividing the number of times of printing a target web page included in the web page browsing history, by the total number of times of printing all pages. Furthermore, "number of mail transmissions/Σ number of mail transmissions" is obtained by dividing the number of times of transmitting a mail of the target web page included in the web page browsing history by the total number of mail transmissions of all pages. Furthermore, "number of times of web sharing/Σ number of times of web sharing" is obtained by dividing the number of times of web sharing of the target web page included in the web page browsing history by the total number of times of printing of all pages. Note that the calculation formula is not limited to the above.

Furthermore, the above-described d₁ through d₅ indicate weighting coefficients, and may be set as, for example, d₁=0.6, d₂ through d₅=0.1; however, the embodiment is not so limited.

### <Example of classification results including additional information>

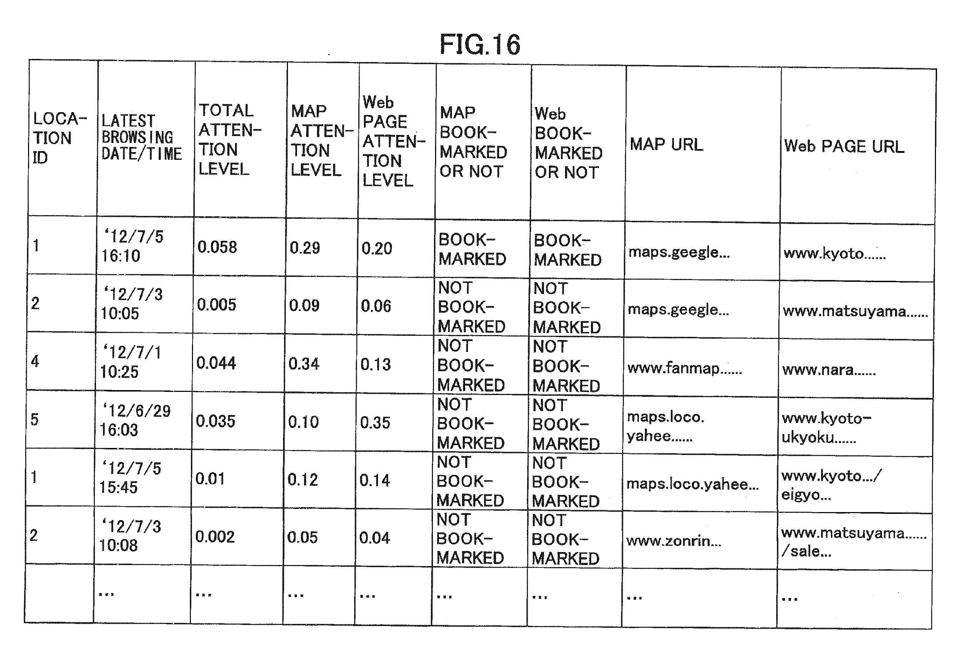

Here, FIG. 16 is a diagram indicating an example of classification results including additional information. Items of the classification results including additional information indicated in FIG. 16 include, for example, "location ID", "latest browsing date/time", "total attention level", "map attention level", "web page attention level", "map bookmarked or not", "web page bookmarked or not", "map URL", "web page URL", etc. Note that the types, the number, and contents, etc., of the items are not so limited.

In the example of FIG. 16, compared to the example of FIG. 10 described above, the items of "map bookmarked or not" and "web page bookmarked or not" are added, other than the items indicated in FIG. 10. Note that in the present embodiment, among these additional information items, at least one information item is to be added, and other additional information items may be added.

Here, the total attention level may be calculated by, for example, "total attention level = map attention level x web page attention level"; however, the embodiment is not so limited. Furthermore, whether the map site and web page are bookmarked or not may be used, for example, for prioritizing the bookmarked map site and web page based on whether bookmarked or not, when determining the order of presenting the map sites and web pages, and for attaching a mark indicating that the map site and web page is bookmarked in the presentation screen, etc.; however, the embodiment is not so limited.

### <Second embodiment>

Here, the first embodiment described above indicates an example of browsing again the map information and web page included in the browsing history for the client terminals 11, based on the history information individually browsed at the respective client terminals 11; however, the embodiment is not so limited.

For example, the information browsed by a user from a web server 12 with a fixed terminal such as a PC, etc., may be browsed with a mobile terminal. In this case, for example, a browsing history management server, etc., for managing the browsing history of each of the plurality of terminals used by the respective users, is provided in the communication network 13. By accessing the browsing history management server, for example, it is possible to browse again the map information, web page, etc., by using the browsing history browsed by another client terminal used by the same user.

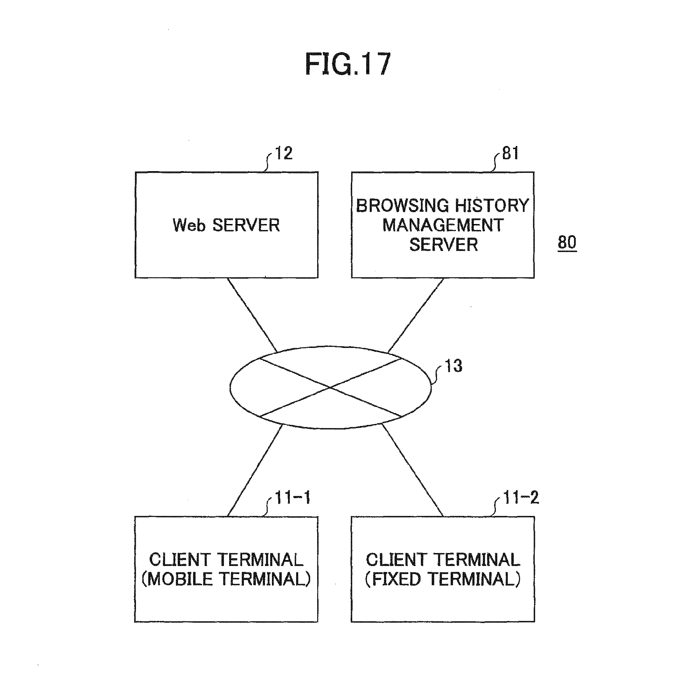

Here, a description is given, with reference to a drawing, of a schematic example of a browsing system according to the second embodiment including the browsing history management server described above. FIG. 17 is a diagram indicating a schematic example of a browsing system according to the second embodiment.

Note that in a browsing system 80 indicated in FIG. 17, the same elements as those of the browsing system 10 indicated in FIG. 1 described above are denoted by the same reference numerals, and detailed descriptions are omitted herein.

The browsing system 80 indicated in FIG. 17 includes client terminals 11-1, 11-2 as examples of information processing apparatuses, a web server 12, and a browsing history management server 81. The client terminals 11-1, 11-2, the web server 12, and the browsing history management server 81 are connected by a communication network 13 represented by, for example, the Internet, etc., in a state in which transmission/reception of information is possible.

It is assumed that both the client terminals 11-1, 11-2 are terminals that are used by the same user. The user uses the client terminal 11 to browse one or more web pages (sites), etc., corresponding to a destination, etc., by accessing the web server 12, etc., via the communication network 13 before going out. Here, the browsed browsing history is sent to the browsing history management server 81 via the communication network 13, and is managed for each user at the browsing history management server 81.

Furthermore, the client terminal 11 accesses the browsing history management server 81 via the communication network 13, and acquires the browsing history that has been classified based on the location ID, the attention level, etc., as described above, from the browsing history browsed with a plurality of terminals.

The browsing history management server 81 acquires, from each client terminal 11, the browsing history of a web page, etc., acquired from the web server 12 by the client terminal 11, and manages the acquired browsing history for each user. Furthermore, the browsing history management server 81 classifies the browsing history in the above-described client terminal 11, based on the above-described attention level, etc. Furthermore, in response to an instruction to present the classification results from the client terminal 11, the browsing history management server 81 extracts a web page relevant to a destination that is highly likely to be visited when the user goes out, based on the location word obtained from the client terminal 11 and the instructed user information, and presents the extracted web page on the screen of the client terminal 11.

Note that the process at the browsing history management server 81 described above, may be realized, for example, by performing the same process as the contents processed at the client terminal 11 according to the first embodiment described above. That is to say, as indicated in the second embodiment, when the browsing system 80 includes the browsing history management server 81, the processes of calculating the attention level and classifying the sites, etc., are not performed at the client terminal 11, but the browsing history processes at the client terminal 11 indicated in the first embodiment are performed at the browsing history management server 81.

Accordingly, in the second embodiment, for example, the web page that has been browsed with a fixed terminal that is unable to move such as the client terminal 11-2, may be acquired by the client terminal 11-1 that is a mobile terminal.

Note that in the example of FIG. 17, the number, etc., of the client terminal 11, the web server 12, and the browsing history management server 81 is not limited to the above. For example, as the client terminal 11, a terminal to be used by another user may be provided, and when the browsing history management server 81 acquires browsing history, the browsing history of the other user may also be presented.

Furthermore, in the example of FIG. 17, the web server 12 and the browsing history management server 81 are separately provided; however, the embodiment is not so limited. For example, the functions of the browsing history management server 81 may be provided in the web server 12 described above.

### <Regarding map information>

Here, the above-described map information is described as map information that is obtained from a predetermined map site, etc., including the location of a destination as one example; however, the embodiment is not so limited. For example, when the location that is the destination is a complex facility constituted by a plurality of tenants, etc., the in-store map, etc., of each of the floors in the facility may also be handled as map information.

In this case, in the above-described embodiment, for example, location IDs for prefectural and city government names, municipal names, etc., are set; however, the embodiment is not so limited. For example, a location ID may be set for the name of the complex facility (for example, ○○ outlet, Ox department store), the name of a sightseeing facility (for example, xx amusement park, ΔΔ land), etc.

Note that the method of extracting the complex facility name and the sightseeing facility name includes, for example, performing morphological analysis, etc., on the text information, etc., in the map site or web page, and checking the obtained result and a facility name DB set in advance against each other, to extract a complex facility name. That is to say, in the present embodiment, a dictionary (for example, a facility name DB) by which the complex facility name and sightseeing facility name may be determined from the word obtained by morphological analysis, etc., is included, and the dictionary and the morphological analysis result are checked against each other, to acquire a location ID (location word), etc.

Furthermore, in the present embodiment, for example, the browsing history may be classified by calculating the attention level from map information obtained from a social network service such as Facebook (registered trademark) and mixi (registered trademark)and information obtained from a web page.

As described above, according to the present embodiment, the browsing history may be appropriately classified. Specifically, for example, the attention level of the web page and information relevant to the location are extracted from the browsing status and the contents, etc., of map information and a web page, etc., browsed by the user, and the web page having an attention level that is greater than or equal to a threshold, may be classified by the information relevant to the location. Accordingly, for example, the user may have the classified map information and web pages presented by being sorted in a predetermined order (for example, in a descending order according to the attention level, the order in how recent the browsing date/time is, and the order according to the nearness to the present position of the user), etc.

Therefore, the user may easily browse again the map information and the web page of a store, a sightseeing spot, etc., checked in the past. Furthermore, in the present embodiment, the above-described attention level, etc., may be used to appropriately classify the web page (browsing history) that is highly likely to be visited by the user, and present the web page.

The embodiments described above in detail are not limited to specific embodiments, and various modifications and variations may be made without departing from the scope of the present invention. Furthermore, all of or some of the elements in the above embodiments may be combined.

### DESCRIPTION OF THE REFERENCE NUMBERS

10, 80 browsing system
11 client terminal (information processing apparatus)
12 web server
13 communication network
21 input unit
22 output unit
23 storage unit
24 browse operation detection unit
25 map information browse detection unit
26 map information attention level extraction unit
27 location information detection unit
28 web page attentional level extraction unit
29 browsing history classification unit
30 presenting unit
31 transmission/reception unit
32 control unit
41 input device
42 output device
43 drive device
44 secondary storage device
45 main storage device
46 CPU
47 network connection device
48 positioning device
49 acceleration sensor
50 angular speed sensor
51 recording medium
60, 70 screen
81 browsing history management server

## Claims

1. An information processing apparatus comprising:
a browsing operation detection unit configured to detect a browsing operation by a user with respect to a web page displayed on a screen;
a map information browse detection unit configured to detect browsing of map information relevant to the web page;
a storage unit configured to store browsing history in which location information corresponding to the map information obtained by the map information browse detection unit and the browsing operation obtained by the browsing operation detection unit are associated with each other;
a map information attention level extraction unit configured to extract a map attention level corresponding to a browsing operation performed on the map information, with respect to the browsing history stored in the storage unit; and
a classification unit configured to classify the web page for each item of the location information, by using the map attention level obtained by the map information attention level extraction unit.

2. The information processing apparatus according to claim 1, further comprising:
a location information detection unit configured to detect whether predetermined location information is included in the web page; and
a web page attention level extraction unit configured to extract a web page attention level corresponding to the predetermined location information detected by the location information detection unit, wherein
the classification unit classifies the web page by using the map attention level obtained by the map information attention level extraction unit and the web page attention level obtained by the web page attention level extraction unit.

3. The information processing apparatus according to claim 1 or 2, further comprising:
a presenting unit configured to present, on the screen, a classification result obtained by the classification unit.

4. The information processing apparatus according to claim 2 or 3, wherein
the classification unit calculates a total attention level by multiplying the web page attention level by the map attention level, and classifies the web page based on the calculated total attention level.

5. The information processing apparatus according to claim 4, wherein
the presenting unit displays, on the screen, a predetermined number of items of the browsing history in a predetermined order as the classification result, based on the total attention level.

6. The information processing apparatus according to any one of claims 1 through 5, wherein
the classification unit classifies the web page for each of a plurality of hierarchical layers that are set in advance with respect to the location information.

7. The information processing apparatus according to claim 2, wherein
the map attention level and the web page attention level are extracted by using at least one of a latest browsing date/time, a total browsing time, a number of browsing times, a number of times of changing size, a number of printing times, a number of mail transmissions, a number of times of web sharing, and bookmarked or not.

8. A browsing history classification method comprising:
a browsing operation detecting step of detecting a browsing operation by a user with respect to a web page displayed on a screen;
a map information browse detecting step of detecting browsing of map information relevant to the web page;
a storing step of storing, in a storage unit, browsing history in which location information corresponding to the map information obtained at the map information browse detecting step and the browsing operation obtained at the browsing operation detecting step are associated with each other;
a map information attention level extracting step of extracting a map attention level corresponding to a browsing operation performed on the map information, with respect to the browsing history stored in the storage unit; and
a classification step of classifying the web page for each item of the location information, by using the map attention level obtained at the map information attention level extracting step.

9. A browsing history classification program that causes a computer to execute a process, the process comprising:
detecting a browsing operation by a user with respect to a web page displayed on a screen;
detecting browsing of map information relevant to the web page;
storing, in a storage unit, browsing history in which location information corresponding to the map information and the browsing operation are associated with each other; and
extracting a map attention level corresponding to a browsing operation performed on the map information, with respect to the stored browsing history, and classifying the web page for each item of the location information, by using the extracted map attention level.
